# EUROPEAN PATENT APPLICATION

(11) **EP 3 248 664 A1**
(43) Date of publication of application: **29.11.2017**
(21) Application number: 16180714.4
(22) Date of filing: 22.07.2016
(51) Int. Cl.: B01D 35/30, B01D 35/153

(54) **REUSABLE FILTER SYSTEM**

(30) Priority: 26.05.2016 US 201615166231
(71) Applicant: Hong Kong Ecoaqua Co., Limited, Chai Wan, Hong Kong (CN)
(72) Inventor: ZHIBIN, Zou, JIMO QUINGDAO (CN)
(74) Representative: Dendorfer, Claus

(57) **Abstract**

A reusable fluid filter unit is disclosed. The reusable fluid filter unit encloses a filter and is removably connected to a manifold. In an embodiment, the filter unit includes an end cap that is detachable so as to replace the filter inside the filter unit. In an embodiment, the filter unit may include embossments or other structures that depress a mechanical valve in the manifold when the filter unit engages the manifold.

## Description

### CROSS-REFERENCE TO RELATED APPLICATIONS

This Application claims priority to European Design Application No. 3081181, by Zhibin Zou, filed April 22, 2016, which is incorporated herein by reference; this Application also claims priority to Chinese Patent Application No. 2016301513033, by Zhibin Zou, filed April 28, 2016; this Application also claims priority to a continuation-in-part of
US Patent Application No. 29/564,197 (Docket No. CO-2), entitled "Filter Unit," by Zhibin Zou, filed May 11, 2016;
US Patent Application No. 29/564,255 (Docket No. CO-3), entitled "Filter Unit," by Zhibin Zou, filed May 11, 2016;
US Patent Application No. 29/564,262 (Docket No. CO-4), entitled "Filter Unit," by Zhibin Zou, filed May 11, 2016; and
US Patent Application No. 29/564,270 (Docket No. CO-5), entitled "Filter Unit," by Zhibin Zou, filed May 11, 2016.

All of the above Applications are incorporated herein by reference.

### FIELD

This specification relates generally to the purification of fluid.

### BACKGROUND

The subject matter discussed in the background section should not be assumed to be prior art merely as a result of its mention in the background section. Similarly, a problem and the understanding of the causes of a problem mentioned in the background section or associated with the subject matter of the background section should not be assumed to have been previously recognized in the prior art. The subject matter in the background section may merely represent different approaches, which in and of themselves may also be inventions.

Fluid filter systems remove impurities from fluid, such as water, so as to fulfill various requirements (e.g., for drinking purpose, medical use, industrial use, etc.). This specification recognizes the need for replacing filters in filter cartridges.

### BRIEF DESCRIPTION OF THE FIGURES

In the following drawings like reference numbers are used to refer to like elements. Although the following figures depict various examples of the invention, the invention is not limited to the examples depicted in the figures.
FIG. 1 shows a diagram of an embodiment of a fluid filter system;
FIG. 2A shows an exploded view of an embodiment of the fluid filter system of FIG. 1;
FIG. 2B shows another exploded view of an embodiment of the fluid filter system;
FIG. 3A shows a bottom view of an embodiment of the manifold of the fluid filter system;
FIG. 3B shows a cross-sectional view of an embodiment of the manifold;
FIG. 4A shows a diagram of an embodiment of a filter unit of the fluid filter system;
FIG. 4B shows a side view of an embodiment of the filter unit;
FIG. 4C shows another side view of an embodiment of the filter unit;
FIG. 4D shows a top view of an embodiment of a housing of the filter unit;
FIG. 4E shows a bottom view of an embodiment of the housing with the end cap detached;
FIG. 4F shows a bottom view of an embodiment of the end cap;
FIG. 4G shows a cross-sectional side view of an embodiment of the filter unit;
FIG. 4H shows another cross-sectional side view of an embodiment of the filter unit;
FIG. 4I shows a top view of an embodiment of the end cap;
FIG. 5A shows a cross-sectional side view of an embodiment of the fluid filter system;
FIG. 5B shows another cross-sectional side view of an embodiment of the fluid filter system;
FIG. 6A shows a diagram of an embodiment of a filter cap that includes embossments;
FIG. 6B shows a side view of an embodiment of the filter cap;
FIG. 6C shows another side view of an embodiment of the filter cap;
FIG. 6D shows a top view of an embodiment of the filter cap;
FIG. 6E shows another view of an embodiment of the filter cap;
FIG. 7A shows a diagram of another embodiment of a filter unit of a fluid filter system;
FIG. 7B shows a cross-sectional side view of an embodiment of the filter unit of FIG. 7A;
FIG. 7C shows another cross-sectional side view of an embodiment of the filter unit of FIG. 7A;
FIG. 7D shows a top view of an embodiment of the housing of FIG. 7A;
FIG. 7E shows a bottom view of an embodiment of the housing of FIG. 7D;
FIG. 8A shows a cross-sectional side view of an embodiment of a fluid filter system that includes the filter unit of FIG. 7A;
FIG. 8B shows another cross-sectional side view of an embodiment of the fluid filter system of FIG. 8A;
FIG. 9 is a flowchart of an embodiment of a method of using the fluid filter system; and
FIG. 10 is a flowchart of an embodiment of a method of making the fluid filter system.

### DETAILED DESCRIPTION

Although various embodiments of the invention may have been motivated by various deficiencies with the prior art, which may be discussed or alluded to in one or more places in the specification, the embodiments of the invention do not necessarily address any of these deficiencies. In other words, different embodiments of the invention may address different deficiencies that may be discussed in the specification. Some embodiments may only partially address some deficiencies or just one deficiency that may be discussed in the specification, and some embodiments may not address any of these deficiencies.

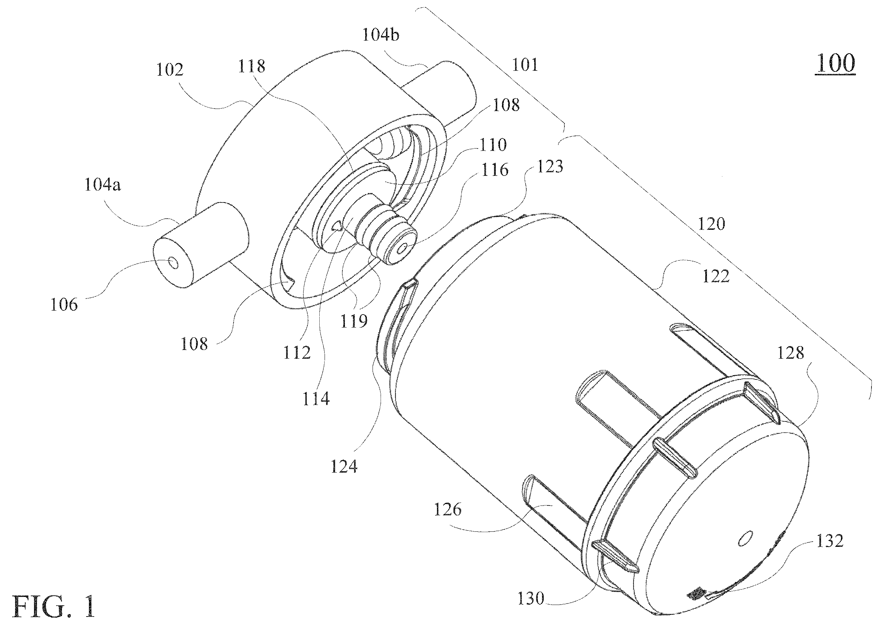

In general, at the beginning of the discussion of each of FIGs. 1-8B is a brief description of each element. After the brief description of each element, each element is further discussed, usually in numerical order, but there is no one location where all of the information of any element of FIGs. 1-8B is necessarily located. Unique information about any particular element or any other aspect of any of FIGs. 1-10 may be found in, or implied by, any part of the specification.

FIG. 1 shows a diagram of an embodiment of a fluid filter system 100. The fluid filter system 100 includes at least a manifold 101, a collar 102, an inlet port 104a, an outlet port 104b, an inlet channel 106, tabs 108, a core member 110, a valve 112, an outlet conduit 114, an outlet opening 116, an o-ring 118, o-rings 119, a filter unit 120, a housing 122, a neck 123, tabs 124, indentations 126, an end cap 128, tabs 130, and markings 132. In other embodiments, the fluid filter system 100 may not include all of the components listed and/or may include other components in addition to or instead of those listed above.

In at least one embodiment, the fluid filter system 100 includes a removable filter cartridge, which has a removable filter within. In this specification, the terms "removable," "removably," and "detachable" refer to being easily removable by hand (e.g., without tools).

The fluid filter system 100 includes a manifold that is removably connected to a filter unit of the fluid filter system 100 that encloses a filter. In this specification, the terms "filter unit" and "body" (e.g., the body of fluid filter system 100) may be used interchangeably and may be substituted one for another to obtain other embodiments. Unfiltered fluid runs through an inlet port of the manifold, and is then directed to a filter inside the filter unit to be filtered. The filtered fluid is subsequently directed out of an outlet port of the manifold and sent to its point of use. A detachable end cap is connected to the filter unit, which can be detached so that the filter can be replaced. In this specification, the side of the manifold 101 facing away from the filter unit is referred as the top side of the fluid filter system 100, while the end of the filter unit away from the manifold 101 is referred to as the bottom side of the fluid filter system 100. In this specification, the terms "filter," "filter element," and "filter media" may be interchanged with one another to obtain different embodiments. In this specification, the terms "fluid" and "water" may be interchanged with one another to obtain different embodiments.

Manifold 101 is a manifold structure that includes an inlet port for receiving unfiltered fluid from a fluid source/supply and an outlet port for transporting filtered fluid out of the fluid filter system 100. In at least one embodiment, the manifold 101 interfaces with the filter unit of the fluid filter system 100 that encloses a filter. The manifold 101 includes molded channels to direct incoming unfiltered fluid to the filter media while allowing filtered fluid to be transported out of the manifold 101. In at least one embodiment, the manifold 101 includes at least one mechanically driven valve that is used to control the access of unfiltered fluid into the filter unit of the fluid filter system 100.

Collar 102 is a peripheral wall that surrounds a core member of the manifold 101. In at least one embodiment, an inlet port and an outlet port are connected through the collar 102 to the core member of the manifold 101. In an embodiment, the inlet port and outlet port extending from the collar 102 are diametrically opposed and facing opposite directions.

Inlet port 104a includes a tubular structure having an inlet channel that may be connected to a fluid source/supply for receiving a flow of unfiltered fluid. The inlet port 104a directs the unfiltered fluid into a core member of the manifold 101.

Outlet port 104b includes a tubular structure having an outlet channel that may be connected to an outlet tubing that transports filtered fluid out of the fluid filter system 100 to the point of use. The outlet port 104b receives filtered fluid from the core member of the manifold 101 and directs filtered fluid out of the manifold 101.

Inlet channel 106 is a channel in the inlet port 104a that directs the unfiltered fluid into the fluid filter system 100. In an embodiment, the inlet channel 106 has a circular cross section (however, inlet channel 106, as well as any of the channels of this specification, may have any cross sectional shape).

Tabs 108 may be one or more threads for screwing the filter unit of the fluid filter system 100 to manifold 101. Tabs 108 may include a pair of diametrically opposed inwardly directed tabs extending from the inner surface of the collar 102. In at least one embodiment, tabs 108 are located near the bottom side of the collar 102, facing the filter unit of the fluid filter system 100. In at least one embodiment, the tabs 108 may engage a pair of mating tabs on the top of the filter unit so as to securely connect the manifold 101 and the filter unit of the fluid filter system 100. In at least one embodiment, the tabs 108 have ramps that guide the tabs on the top of the filter unit to ride up to the tabs 108 so as to engage the manifold 101 and the filter unit.

Core member 110 is the central portion of the manifold that includes channels that are connected to the inlet port 104a and outlet port 104b. In at least one embodiment, the core member 110 includes an inlet channel that leads unfiltered fluid from the inlet port 104 into the filter unit and an outlet channel that directs filtered fluid out to the outlet port 104b. In an embodiment, the core member 110 is supported by support structures extending between the collar 102 and the core member 110.

Valve 112 is a mechanically driven valve that controls access of unfiltered fluid through an inlet opening in the manifold 101 into the filter unit of the fluid filter system 100. In an embodiment, the valve 112 is biased to close the inlet opening. When the valve 112 is depressed toward the top of the manifold 101, a flow path is formed through the inlet opening, allowing unfiltered fluid to enter the filter unit of the fluid filter system 100.

Outlet conduit 114 is a cylindrical structure extending from the bottom surface of the core member 110. The outlet conduit 114 includes an outlet channel and an outlet opening that align with a channel in the filter unit for directing filtered fluid out of the filter unit to the outlet port 104b.

Outlet opening 116 is an opening through which the filtered water in the filter unit enters the outlet channel of the outlet conduit 114. In an embodiment, the filtered fluid in the filter unit runs through the outlet opening 116 into the outlet channel in the outlet conduit 114 and then out of the outlet port 104b.

O-ring 118 is a circular loop of elastomer fitted on the core member 110 for providing a fluid-tight seal when the core member 110 is inserted into a neck that is on the top portion of the filter unit. The seal between the core member 110 and the neck prevents the fluid entering the filter unit from leaking around the core member 110. In one embodiment, the o-ring 118 is made of rubber, silicon, or any other soft and/or resilient fluid tight materials. In an embodiment any of the O-rings of this specification may be made from any gummy, rubbery material, elastomer, nonporous, and/or flexible material that prevents fluids from leaking. Some non-limiting examples of materials that may be used for the O-rings are natural rubber, polyacrylate rubber, ethylene-acrylate rubber, polyester urethane, bromo isobutylene isoprene bromobutyl, polybutadiene buna, chloro isobutylene isoprene chlorobutyl, buty polychloroprene chloroprene, neoprene, chlorosulphonated polyethylene hypalon, epichlorohydrin, epichlorohydrin, epichlore, epichloridrine, herclor, hydrin, ethylene propylene, ethylene propylene diene monomer, nordel, polyether urethane, perfluorocarbon rubber, kalrez, chemraz, fluoronated hydrocarbon viton, fluorel, fluoro silicone, silicone rubber, fluorocarbon rubber, hydrogenated nitrile butadiene, polyisoprene (synthetic) natural rubber, isobutylene isoprene butyl butyl, acrylonitrile butadiene, nitrile, perbunan, buna-N, polyurethane, polyurethane, styrene butadiene, buna-S, GRS, buna VSL, buna SE, styrene ethylene butylene styrene copolymer rubber, polysiloxane silicone rubber, vinyl methyl silicone, silicone rubber, acrylonitrile butadiene carboxy monomer, carboxylated nitrile, styrene butadiene carboxy monomer, thermoplastic polyether-ester, styrene butadiene block copolymer, and/or styrene butadiene carboxy block copolymer. O-rings 119 include a pair of o-rings fitted on the outlet conduit 114 for providing a fluid-tight seal when the outlet conduit 114 is inserted into a channel that carries outlet flow of filtered fluid. The seal between the outlet conduit 114 and the outlet channel prevents the exiting filtered fluid from leaking around the outlet conduit 114. Although FIG. 1 depicts a pair of o-rings 119 on the outlet conduit 114, other numbers of o-rings may be used to seal the outlet conduit 114. O-rings 119, as well as, the other o-rings in this specification are optional and other methods of making the connection fluid-tight instead, such as by placing a waxy substance on the connection that does not dissolve in the fluid.

Filter unit 120 is a portion of the fluid filter system 100 that encloses the filter. Filter unit 120 may be a removable filter cartridge have a removable cap, via which the filter maybe replaced. In at least one embodiment, the filter unit 120 includes channels/spaces that are coupled to the inlet and outlet channels of the manifold 101 to form a fluid-tight container during use of the fluid filter system 100. The filter unit 120 receives unfiltered fluid, via the inlet channel of the manifold 101, filters the fluid, and then directs the filtered fluid through the outlet channel of the manifold 101 and then directs the filtered fluid out of the fluid filter system 100.

Housing 122 is a housing that is connected to an end cap to form a container of the filter unit 120 for holding the filter. In at least one embodiment, the top of the housing 122 is coupled to the manifold 101, while the bottom end of the housing 122 is sealed by the end cap while in use.

Neck 123 is a tubular neck portion protruding from the top of the housing 122. In at least one embodiment, the neck 123 engages with the core member 110 of the manifold 101 and forms a fluid tight engagement with the manifold 101.

Tabs 124 are a pair of diametrically opposed outwardly directed tabs extending from the outside circumferential margin of the neck 123. Tabs 124 may be threads, via which filter unit 120 may be screwed to manifold 101. In at least one embodiment, the tabs 124 are designed to rotatably engage with and be retained by the tabs 108 on the inside surface of the collar 102 to lock the housing 122 to the manifold 101. In an embodiment, the tabs 124 have ramps at lower margins that are designed for compressive engagement with the ramps at upper margins of the tabs 108, to ride up on the ramps of tabs 108 to engage the tabs 108.

Indentations 126 are optional and may be a plurality of grooves around the outside perimeter of the housing 122, which form a grip. In an embodiment, the indentations 126 extend from the bottom edge of the housing 122 toward the neck 123. The indentations 126 facilitate grasping and/or gripping the filter unit 120 and/or for decoration purposes. In the embodiment in FIG. 1, indentations 126 have a cross sectional shape that is section of a circle (e.g., an eighth of a circle) and optionally has a partly spherical top end. Indentations 126, if present, may have any of a number of shapes, such as having a cross section that is elliptical, ovular, rectangular, triangular, and/or polygonal. Similarly, the perimeter of the housing 122 may include protrusions in addition to or instead of indentations 126.

End cap 128 is an end cap that is removably attached to the bottom of the housing 122, on the opposite side of filter unit 120 as the neck 123. In at least one embodiment, the end cap 128 is detachable (e.g., by being screwed or snapped on and off) from the housing 122 so that the filter inside the filter unit 120 may be replaced without replacing the entire filter unit 120, so that filter unit 120 may be used as a replaceable filter cartridge that also has a replaceable filter.

Tabs 130 are a plurality of outwardly directed protrusions extending from the peripheral of the end cap 128. In an embodiment, tabs 130 are parallel to the longitudinal axis of the filter unit 120. In at least one embodiment, tabs 130 provide a better grip when a user rotates the end cap 128. In an embodiment, tabs 130 are symmetrically distributed around the peripheral of the end cap 128. Alternatively, the distribution of tabs 130 is asymmetrical. The sizes, shapes, and/or numbers of tabs 130 may vary among different embodiments. Similarly, the perimeter of cap 128 may include indentations in addition to or instead of tabs 130.

Markings 132 are optional, and may include markings molded or printed on the bottom side of the end cap 128. In an embodiment, markings 132 may include instructions and/or arrows showing the directions to rotate the end cap 128 so as to detach and tighten up the end cap 128. For example, markings 132 may include an arrow pointing to an "ON" sign to show the rotation direction to tighten up the end cap 128 to the housing 122, and/or an arrow pointing to an "OFF" sign to show the rotation direction to detach the end cap 128 from the housing 122.

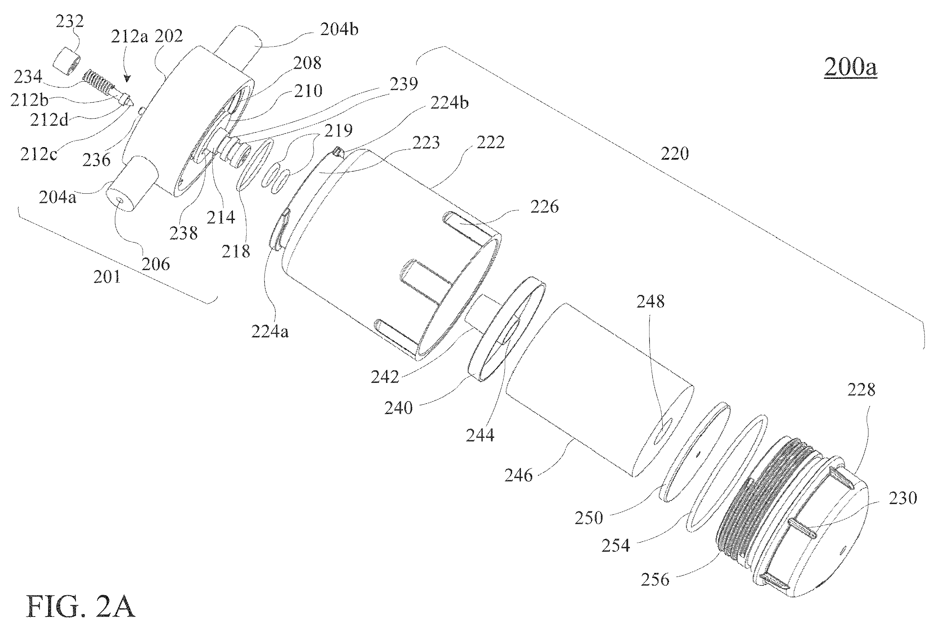

FIG. 2A shows an exploded view of an embodiment of the fluid filter system 200a. The fluid filter system 200a includes at least a manifold 201, a collar 202, an inlet port 204a, an outlet port 204b, an inlet channel 206, tabs 208, a core member 210, a valve 212a, a shaft 212b, a head 212c, a collar 212d, an outlet conduit 214, an o-ring 218, o-rings 219, a filter unit 220, a housing 222, a neck 223, tabs 224a and 224b, indentations 226, an end cap 228, tabs 230, a cap 232, a spring 234, a o-ring 236, an inlet opening 238, grooves 239, a filter cap 240, a top protrusion 242, a bottom protrusion 244, a filter 246, an inner channel 248, a filter base 250, an o-ring 254, and threads 256. In other embodiments, the fluid filter system 200a may not include all of the components listed and/or may include other components in addition to or instead of those listed above.

FIG. 2A shows an exploded view of an embodiment of the fluid filter system 100. The manifold 201, collar 202, inlet port 204a, outlet port 204b, inlet channel 206, tabs 208, core member 210, outlet conduit 214, o-ring 218, o-rings 219, filter unit 220, housing 222, neck 223, tabs 224a and 224b, indentations 226, end cap 228, and tabs 230 may be embodiments of the manifold 101, collar 102, inlet port 104a, outlet port 104b, inlet channel 106, tabs 108, core member 110, outlet conduit 114, o-ring 118, o-rings 119, filter unit 120, housing 122, neck 123, tabs 124, indentations 126, end cap 128 and tabs 130, which were discussed in conjunction with FIG. 1.

Valve 212a may be an embodiment of the valve 112. Valve 212a includes a shaft 212b that is connected to a head 212c with a collar 212d in-between the shaft 212b and head 212c. In at least one embodiment, the diameter of the collar 212d is larger than the diameter of the shaft 212b and the largest diameter of the head 212c, so that in the closed position the collar 212d blocks the opening (e.g., an inlet opening) in which valve 112 sits. A spring is placed around the shaft 212b and stopped by the collar 212d of the valve 212a. The head 212c of the valve 212a includes a tapered end, with an arrow shaped cross section, pointing away from the shaft 212b. In at least one embodiment, the valve 212a is placed inside a channel in the core member 210, with the tapered end of the valve 212a protruding in an inlet opening at the bottom of the core member 210. The tapered end helps align the valve 212a with the inlet opening. The diameter of the collar 212d is larger than the inner diameter of the inlet opening. Any of a number of other types of valves may be used instead of the valve 212a in FIG. 2A. For example, valve 212a may have a flat head instead of a pointy head, or valve 212a may be a flat lid (or flap) that is hinged to the inlet opening and spring biased to remain closed.

Cap 232 is a cap that is fitted to a top end of the channel in which the valve 212a is inserted. The cap 232, when connected to the channel in the core member 210, blocks the top end of the channel and provides a support to the top end of the spring that is away from the head of the valve 212a. In at least one embodiment, the cap 232 seals the top end of the channel in which the valve 212a is located to prevent the inlet unfiltered fluid from leaking around the cap 232.

Spring 234 is a spring that includes coils that spiral around the shaft of the valve 212a, and a bottom end of spring 234 is stopped by the edge of the head while the top end is toward the cap 232. In other words, the top of spring 234 is prevented from moving in a direction away from filter unit 220 by cap 232. Cap 232 is securely attached to manifold 201. Cap 232 helps ensure that spring 234 pushes valve 212a into the inlet opening, by spring 234 pushing against cap 232. The spring 234 biases the valve 212a to stay closed and thereby blocking the inlet opening.

O-ring 236 is optionally and is an o-ring that is fitted on the head 212c of the valve 212a near the collar 212d for providing a fluid-tight seal when the valve 212a closes and blocks the inlet opening. The seal between the valve 212a and the inlet opening prevents the inlet unfiltered fluid in the channel from leaking around the valve 212a through the inlet opening.

Inlet opening 238 is an opening at the opposite end of the channel as the cap 232. The tapered end of the head 212c is biased to protrude downward into the inlet opening 238 and block the inlet opening 238. The inner diameter of the inlet opening 238 is smaller than the diameter of the collar 212d of the valve 212a and the outer diameter of the o-ring 236.

Grooves 239 are two grooves on the outlet conduit 214 that hold the o-rings 219.

Filter cap 240 is a cap that is fitted on the top of the filter. Filter cap 240 is placed at the top of filter and holds the filter in place with respect to the housing 222 and to manifold 201.

Top protrusion 242 engages both housing 222 and manifold 201. Top protrusion 242 is a tubular structure that protrudes from the top side of a dish shaped body of the filter cap 240, facing the manifold 201. In at least one embodiment, the inner diameter of the top protrusion 242 is slightly greater than the outer diameter of the outlet conduit 214. In an embodiment, top protrusion 242 has an inner diameter of 13mm to 17mm. In an embodiment, the inner surface of top protrusion 242 and/or filter cap 240 is made from a nonporous material, such as plastic or metal, that forms a seal with the o-rings 219 of the manifold 201. In this specification, any part that is intended to form a seal with an o-ring or another component so that fluids will not leak may be made from a nonporous material, such as plastic or metal. Some non-limiting examples of nonporous plastics that may be used for the filter cap 240 or the inner surface of top protrusion 242 and/or other components used for creating a seal are Polyethylene Terephthalate (PET), High-Density Polyethylene (HDPE), Acrylonitrile Butadiene Styrene (ABS),Polyvinyl Chloride (PVC) or Polypropylene (PP). In at least one embodiment, the top protrusion 242 is fitted into an opening at the top of the housing 222 while the outlet conduit 214 is inserted into the top protrusion 242. O-rings 219 have an outer diameter that is slightly larger than the inner diameter of top protrusion 242 and outlet conduit 214 has an outer diameter that is slightly less than the inner diameter of top protrusion 242, so that outlet conduit 214 is easily inserted into top protrusion 242, while o-rings are slightly compressed to prevent fluids from leaking. For example, the inner diameter of top protrusion 242 may be 16.7mm or the outer diameter of outlet conduit 214 may be 13.75 mm.

Bottom protrusion 244 is a tubular structure that protrudes from the bottom side of the dish shaped body of the filter cap 240, facing the filter. In at least one embodiment, the bottom protrusion 244 engages the filter to hold the filter in place. For example, bottom protrusion 244 may be fitted into an inner channel of the filter so as to connect the bottom protrusion 244 to the inner channel of the filter. The dish shaped body includes a centrally located through opening connecting the channels in the top protrusion and bottom protrusion. In other embodiments, bottom protrusion 244 may be replaced by other structures, such as pins or tabs that engage complementary structures in the filter.

Filter 246 includes a hollow core into which fluids, under pressure from incoming water, seep from outside filter 246. Filter 246 filters the fluid that is pumped into filter unit 220 to a location in filter unit 220 just outside of the filter 246. After the fluid seeps from just outside filter 246, through the walls of filter 246, into the hollow core within filter 246, the water from the hollow core travels, via the opening of the hollow core in the filter 246, and out of the filter 246 into outlet conduit 214. In an embodiment, filter 246 is cylindrical and opening into the hollow core and the hollow core is a cylindrical channel running through the center of the filter 246 concentric with filter 246. In an embodiment, filter 246 includes an inner channel that is open on both ends, allowing more fluid to fill the hollow core and be processed by filter 246. In other embodiments, filter 246 could have other shapes, such as rectangular square, or spherical, and/or the opening has a different shape than the rest of the hollow core. Similarly, in another embodiment, filter 246 may be open on only one end. In an embodiment, when filter unit 220 is assembled, the filter 246 is slightly compressed between the filter cap 240 and the base (or end cap) of filter unit 220. The compression to fully install the filter 246 prevents unfiltered fluid from bypassing the filter 246 and entering the inner channel inside the filter 246.

Inner channel 248 is the hollow core of filter 246. In an embodiment, inner channel 248 has a circular cross section that runs throughout the length of the filter 246. In other embodiments, inner channel 248 has other cross sectional shapes, such as rectangular, ovular, elliptical, and/or triangular and may not necessarily have the same shape throughout the length of the filter 246. Fluid filtered by the filter 246 enters the inner channel 248 and is then directed through the outlet conduit 214 to the outlet port 204b.

Filter base 250 is an optional plate with a rim, which is an outer edge extending upward toward the filter. The rim is optional and helps hold the filter in place. The filter base 250 holds and supports the bottom of the filter 246 when the filter unit 220 is fully assembled. In an embodiment, the filter base 250 is fitted in a cavity inside the end cap 228. In another embodiment, filter base 250 is built into end cap 228.

O-ring 254 is optional. O-ring 254 is a circular ring shaped like an O that is fitted on a top portion of the end cap 228 for providing a fluid-tight seal when the end cap 228 is connected (e.g., screwed on) to the housing 222. The seal between the end cap 228 and the housing 222 prevents the fluid in the filter unit 220 from leaking around the end cap 228.

Threads 256 are outwardly facing threads on the external of the top portion of the end cap 228. In at least one embodiment, the threads 256 mate with corresponding threads located on the inner surface of the housing 222 near the bottom side for selectively securing the end cap 228 and the housing 222. In another embodiment, end cap 228 has inwardly facing threads, and housing 222 has outwardly facing threads that mate with the inwardly facing threads of end cap 228.

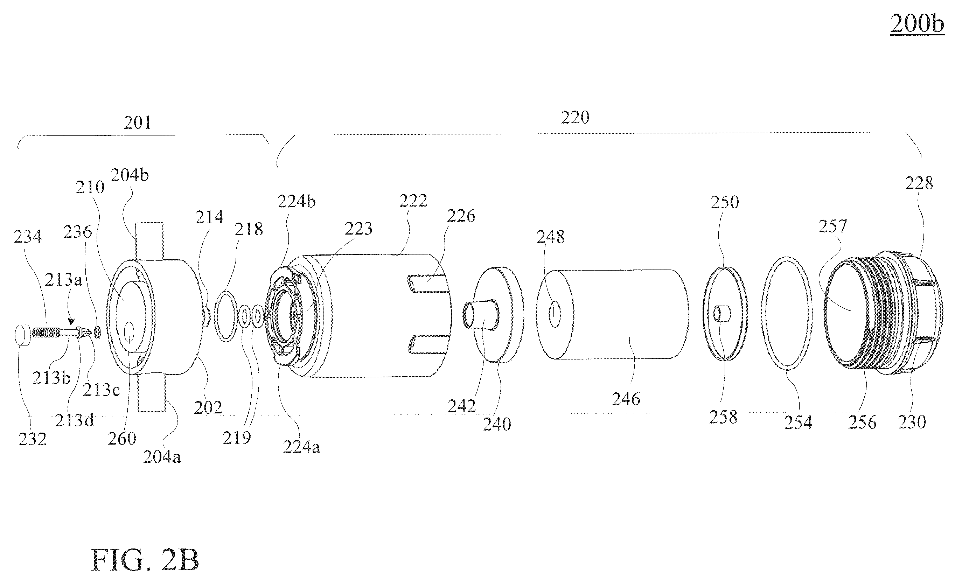

FIG. 2B shows another exploded view 200b of an embodiment of the fluid filter system 200a. The embodiment of the fluid filter system 200a shown in FIG. 2B includes at least the manifold 201, collar 202, inlet port 204a, outlet port 204b, core member 210, a valve 213a, a shaft 213b, a head 213d, a collar 213d, outlet conduit 214, o-ring 218, o-rings 219, filter unit 220, housing 222, neck 223, tabs 224a and 224b, indentations 226, end cap 228, tabs 230, cap 232, spring 234, o-ring 236, filter cap 240, top protrusion 242, filter 246, inner channel 248, filter base 250, o-ring 254, threads 256, a cavity 257, a protrusion 258, and an opening 260. In other embodiments, the embodiment shown in the view 200b may not include all of the components listed and/or may include other components in addition to or instead of those listed above.

FIG. 2B shows another exploded view of the fluid filter system 100 from another angle. Exploded views 200a and 200b may be different views of the same embodiment. In FIG. 2A, the bottoms of the components in the exploded view are shown, whereas in FIG. 2B, the tops of the components of the exploded view are shown.

Valve 213a is similar to the valve 212a except that the valve 212a has a solid tapered cylindrical head while the head of the valve 213a has wings. The valve 213a includes a shaft 213b that is connected to a head 213c, while a collar 213d is placed between the shaft 213b and the head 213c. In an embodiment, the head 213c of valve 213a has four wings that are connected to a core (in other embodiments there may be a different number of wings (e.g., there may be two wings, three wings, five wings, six wings, seven wings, or eight wings, for example). When the collar 213d is pushed into o-ring 218 by spring 328, the collar 213d blocks the water from flowing into the inlet opening 3238. When the collar 213d is lifted off o-ring 218, water flows between the wings of valve 213 into the inlet opening 238. The wings of valve 213 keep valve 213 aligned with the inlet opening 238. By using wings to keep valve 213 aligned instead of making the head having a solid tapered cylindrical shape (such as valve 212a of FIG. 2A), the collar 213d does not need to be pushed as far from the inlet opening 238 to get an adequate flow of water, as compared to were the head to have a solid tapered cylindrical shape. In at least one embodiment, FIGs. 2A and 2B shows alternative embodiments of the valve in the manifold, and both embodiments could be used in any of the embodiments of the fluid filter system in this specification.

Cavity 257 is a hollow cavity inside the end cap 228, with an opening into which a portion of the filter 246 is fitted. In at least one embodiment, the inner bottom of the cavity 257 include structures, such as fins, that contact and support the filter base 250 when the filter 246 is securely installed in the housing 222.

Protrusion 258 is a tubular structure that protrudes from the top side of the filter base 250, facing the filter 246. Protrusion 258 is optional. In at least one embodiment, the protrusion 258 is fitted in the inner channel 248 of the filter 246. In an embodiment, the outer diameter of the protrusion 258 is slightly smaller than the inner diameter of the inner channel 248. Protrusion 258 may help prevent filter 246 from moving too far from side to side.

Opening 260 is an entrance to the channel in which the valve 213a is inserted. In at least one embodiment, after the valve 213a and the spring 234 are inserted into the channel, the opening 260 is closed and sealed by the cap 232. Opening 260 is an opening to the same bore as inlet opening 238. Opening 260 could have other shapes and sizes.

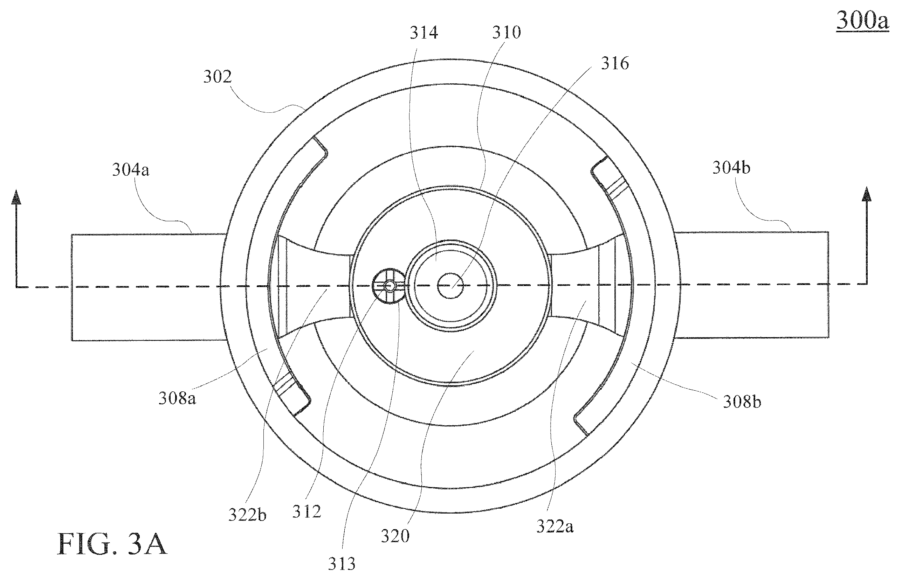

FIG. 3A shows a bottom view 300a of an embodiment of a manifold of the fluid filter system 100. The manifold 300a includes at least a collar 302, an inlet port 304a, an outlet port 304b, tabs 308a and 308b, a core member 310, a valve 312, an inlet opening 313, an outlet conduit 314, an outlet opening 316, an o-ring 318, o-rings 319, a surface 320, an inlet connector 322a, and an outlet connector 322b. In other embodiments, the manifold 300a may not include all of the components listed and/or may include other components in addition to or instead of those listed above.

FIG. 3A shows a top view of a manifold 300a that may be used in the fluid filter system 100. The collar 302, inlet port 304a, outlet port 304b, tabs 308a and 308b, core member 310, valve 312, inlet opening 313, outlet conduit 314, outlet opening 316, o-ring 318, and o-rings 319 may be embodiments of the collar 102 or 202, inlet port 104a or 204a, outlet port 104b or 204b, tabs 108 or 208, core member 110 or 210, valve 112, 212a, or 213a, inlet opening 238, outlet conduit 114 or 214, outlet opening 116, o-ring 118 or 218, and o-rings 119 or 219, respectively, which were discussed in conjunction with FIGs. 1, 2A, and 2B.

Surface 320 is a surface at the bottom of the core member 310, from which the outlet conduit 314 extends. In at least one embodiment, the surface 320 includes the inlet opening 313, in which the head of the valve 312 protrudes. FIG. 3A shows a view of the head of the valve 312. However, other types of valves may be employed in alternative embodiments. The inlet opening 313 is located on the same side as the inlet port 304a and the inlet opening 313 is at the end of the channel in which the valve 312 is located.

Inlet connector 322a and outlet connector 322b are supporting structures that extend between and connect the inner surface of the collar 302 and the core member 310, for supporting the core member 310. In at least one embodiment, the inlet connector 322a includes a channel that connects the inlet channel in the inlet port 304a to the channel inside the core member 310 in which the valve is inserted, so that fluids flow from the inlet channel to the channel inside the core member 310. Similarly, the outlet connector 322b includes a channel that connects the outlet channel in the outlet port 304b to an outlet channel inside the core member 310, so that fluids flow from the channel inside the core member 310 through the inlet channel.

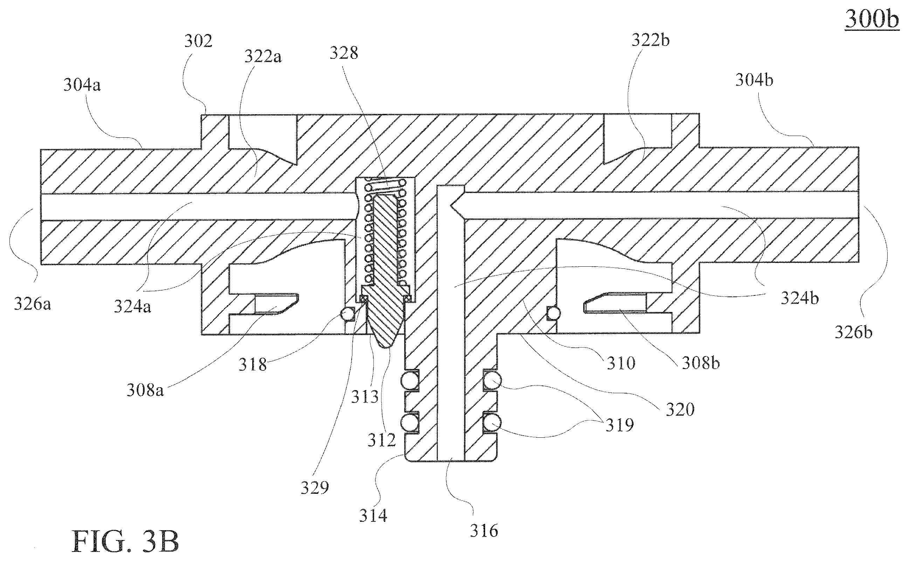

FIG. 3B shows a cross-sectional view 300b of an embodiment of the manifold 300a. The embodiment of the manifold 300a shown in FIG. 3B includes at least the collar 302, inlet port 304a, outlet port 304b, tabs 308a and 308b, core member 310, valve 312, inlet opening 313, outlet conduit 314, outlet opening 316, o-ring 318, o-rings 319, surface 320, inlet connector 322a, outlet connector 322b, an inlet channel 324a, an outlet channel 324b, an entrance 326a, an exit 326b, a spring 328, and an o-ring 329. In other embodiments, the embodiment shown in the view 300b may not include all of the components listed and/or may include other components in addition to or instead of those listed above.

FIG. 3B shows a cross-sectional view 300b of an embodiment of the manifold 300a.

Inlet channel 324a is a channel in the manifold 300b that directs fluid through the inlet port 304a, via the inlet connector 322a to the core member 310a, and out of the inlet opening 313 on the bottom surface 320. In at least one embodiment, the valve 312 is located in a portion of the inlet channel 324a that is in the core member 310, with the valve 312 biased to blocking the inlet opening 313.

Outlet channel 324b is a channel in the manifold 300b that directs fluid through the outlet opening 316 into the outlet conduit 314, via the outlet connector 322b and out of the outlet port 304b.

Entrance 326a is the entrance through which inlet unfiltered fluid runs into the inlet channel 324a in the manifold 300b, while exit 326b is the exit for the outlet filtered fluid out of the manifold 300b.

Spring 328 is an embodiment of the spring 234 that was discussed in conjunction with FIGs. 2A and 2B. O-ring 329 is an embodiment of the o-ring 236 that was discussed in conjunction with FIGs. 2A and 2B.

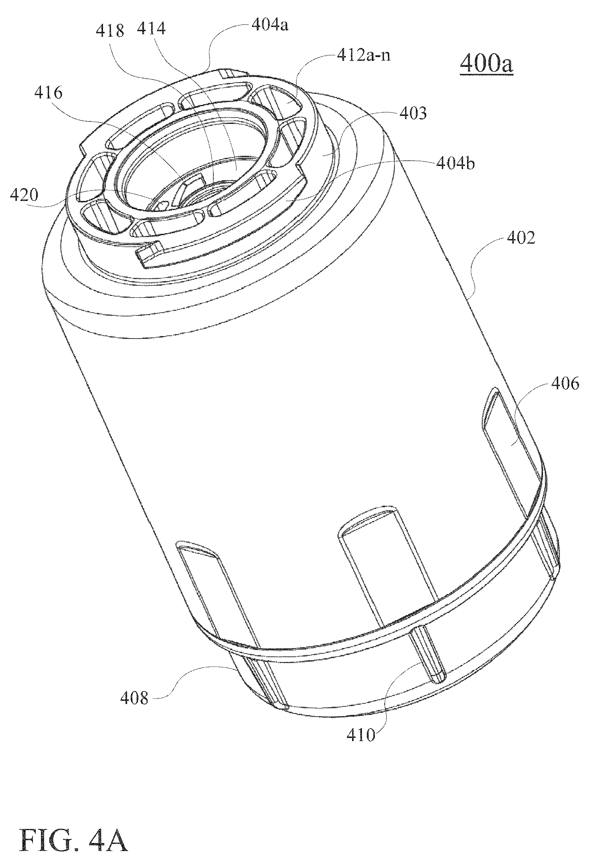

FIG. 4A shows a diagram of an embodiment of a filter unit 400a of the fluid filter system 100. The filter unit 400a includes at least a housing 402, a neck 403, tabs 404a and 404b, indentations 406, an end cap 408, tabs 410, cavities 412a-n, a surface 414, embossments 416, an opening 418, and holes 420. In other embodiments, the filter unit 400a may not include all of the components listed and/or may include other components in addition to or instead of those listed above.

FIG. 4A shows a schematic representation of an embodiment of the filter unit 400a that may be used in the fluid filter system 100. The housing 402, neck 403, tabs 404a and 404b, indentations 406, end cap 408, and tabs 410 may be embodiments of the housing 122 or 222, neck 123 or 223, tabs 124 or 224a and 224b, indentations 126 or 226, end cap 128 or 228, and tabs 130 or 230, respectively, which were discussed in conjunction with FIGs. 1, 2A and 2B.

Cavities 412a-n are a plurality of cavities or grooves indented from the top surface of the neck 403. In at least one embodiment, the cavities 412a-n are perpendicular to the top surface of the neck 403 and located around an opening in the middle of the neck 403. In at least one embodiment, the cavities 412a-n reduces shrinkage (that would otherwise occur as a result of cooling) of the neck 403 during use of the fluid filter system.

Surface 414 is an annular surface inside the neck 403 facing upwards and surrounding an opening into which the outlet conduit 314 of the manifold 300a, for example, is inserted. In at least one embodiment, the outer diameter of the surface 414 is slightly larger than the outer diameter of the core member 310 of the manifold 300a. In an embodiment, the surface 414 faces, without directly contacting, the bottom surface 320 of the core member 310 of the manifold 300a, when fully assembled.

Embossments 416 are raised embossments extending from the surface 414 and facing upwards. In at least one embodiment, the embossments 416 including ramped surfaces. In at least one embodiment, as the manifold 300a is rotatably engaged with the filter unit 400a, the valve 312 is depressed by riding up the ramped surface on one of the embossments 416 so as to open the valve 312. When one of the embossments 416 pushes the valve 312 up, a flow path of inlet fluid is formed through the inlet opening. In an embodiment, the embossments 416 may include a pair of diametrically opposed embossments on the surface 414. Alternatively, the filter unit 400a may include other numbers, sizes, and/or shapes of embossments on the surface 414 or on other structures for controlling the valve. In an embodiment in which valve 212 is a hinged lid or flap, embossments 416 may be shaped as a pin or rod that pushes valve 212, and manifold 101, 201, 300a may be attached to filter unit 120 or 220, for example, by buckles or other fasteners.

Opening 418 is the opening surrounded by the surface 414, into which the outlet conduit 314 of the manifold 300a, for example, may be inserted. In at least one embodiment, the inner diameter of the opening 418 is larger than the outer diameter of the outlet conduit 314 of the manifold 300a.

Holes 420 are a plurality of penetrations on the surface 414. In at least one embodiment, the holes 420 permit inlet unfiltered fluid (e.g., the inlet fluid that pass the inlet opening when the valve is open) to pass toward the filter media inside the filter unit 400a.

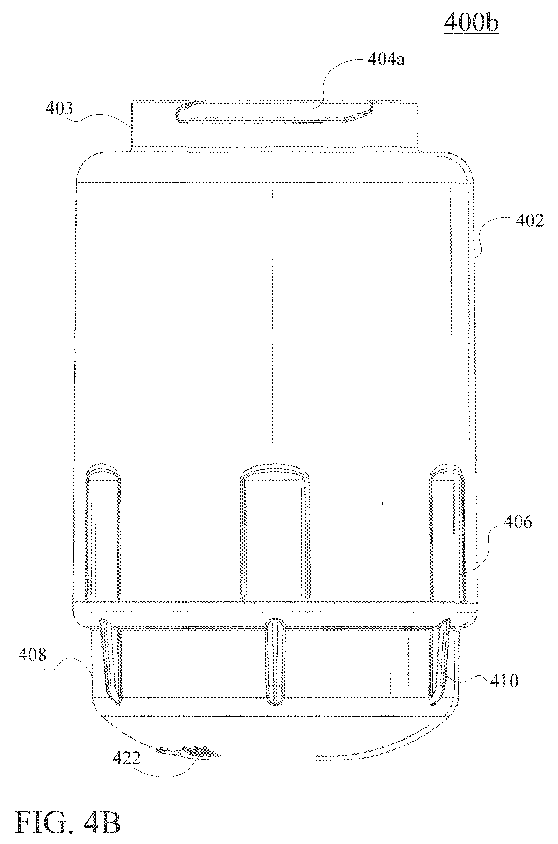

FIG. 4B shows a side view 400b of an embodiment of the filter unit 400a. The embodiment of the filter unit 400a shown in FIG. 4B includes at least the housing 402, neck 403, tab 404a, indentations 406, end cap 408, tabs 410 and markings 422. In other embodiments, the embodiment shown in the view 400b may not include all of the components listed and/or may include other components in addition to or instead of those listed above.

FIG. 4B shows a side view 400b of an embodiment of the filter unit 400a from one side, with the tab 404a visible. Markings 422 may be an embodiment of the markings 132 that was discussed in conjunction with FIG. 1.

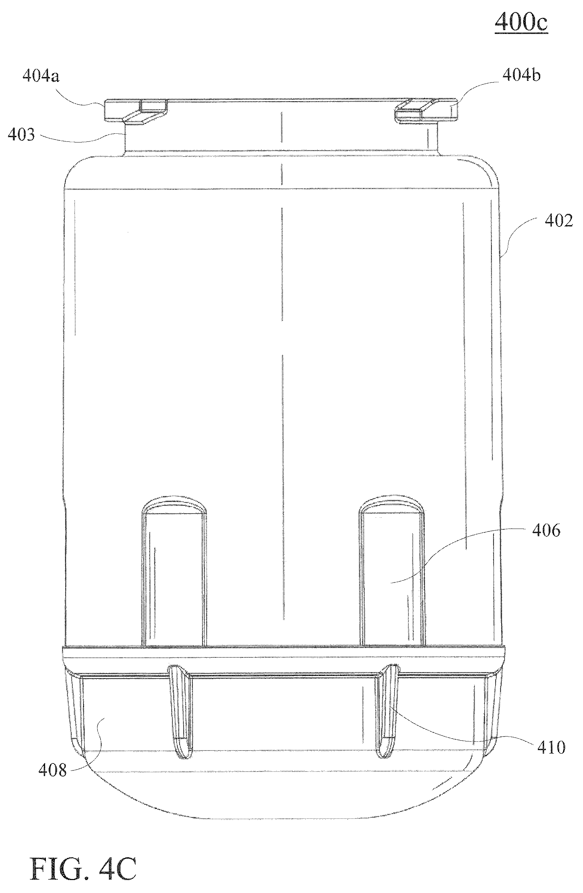

FIG. 4C shows another side view 400c of an embodiment of the filter unit 400a. The embodiment of the filter unit 400a shown in FIG. 4C includes at least the housing 402, neck 403, tabs 404a and 404b, indentations 406, end cap 408, and tabs 410. In other embodiments, the embodiment shown in the view 400c may not include all of the components listed and/or may include other components in addition to or instead of those listed above.

FIG. 4C shows another side view 400c of an embodiment of the filter unit 400a with both tabs 404a and 404b visible.

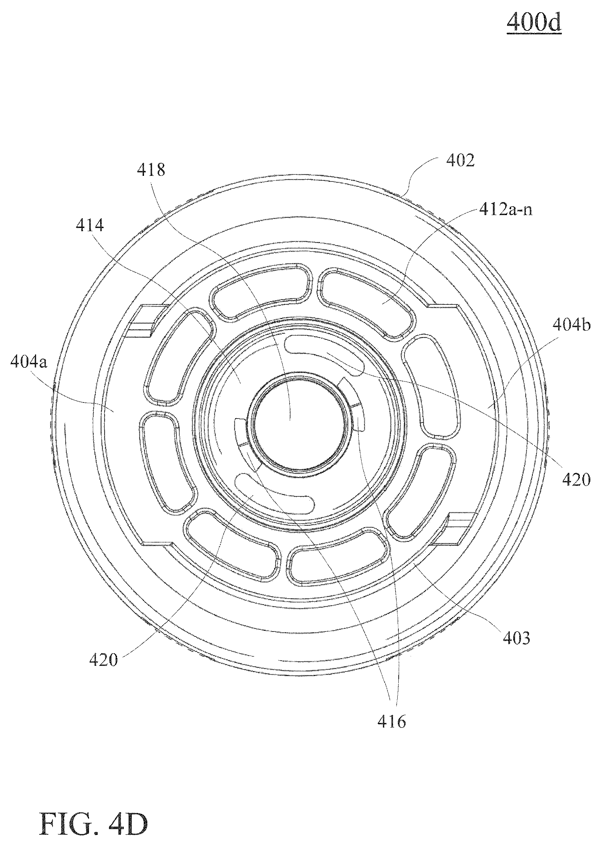

FIG. 4D shows a top view 400d of an embodiment of the housing 402 of the filter unit 400a. The embodiment of the filter unit 400a shown in FIG. 4D includes at least the housing 402, neck 403, tabs 404a and 404b, cavities 412a-n, surface 414, embossments 416, opening 418, and holes 420. In other embodiments, the embodiment shown in the view 400d may not include all of the components listed and/or may include other components in addition to or instead of those listed above.

FIG. 4D shows a top view 400d of an embodiment of the housing 402. Although FIG. 4D shows two diametrically opposed embossments 416, other numbers and/or shapes of embossments may be used instead. Although FIG. 4D shows two diametrically opposed holes 420 on the surface 414, another number of holes in other locations and/or having other shapes may be molded into the surface 414 in alternative embodiments.

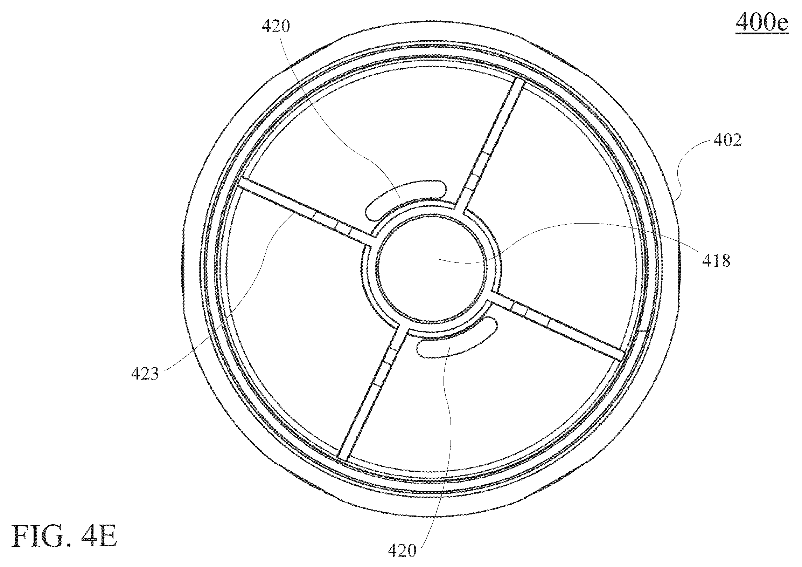

FIG. 4E shows a bottom view 400e of an embodiment of the housing 402 with the end cap 408 detached. The embodiment of the housing 402 shown in FIG. 4E includes at least the housing 402, opening 418, holes 420, and fins 423. In other embodiments, the embodiment shown in the view 400e may not include all of the components listed and/or may include other components in addition to or instead of those listed above.

FIG. 4E shows a bottom view 400e of an embodiment of the inside of the housing 402.

Fins 423 are a plurality of fins located inside the housing 402, extending downwardly from the underside of the top portion of the housing 402 (which includes the underside of surface 414 (FIG. 4A). In at least one embodiment, fins 423 may contact and support the filter cap 240 (FIGs. 2A and 2B) when the filter system is fully assembled. Although four fins 423, approximately 90 degrees apart from each other, are illustrated in FIG. 4E, any number of fins arranged in other locations may be employed in alternative embodiments.

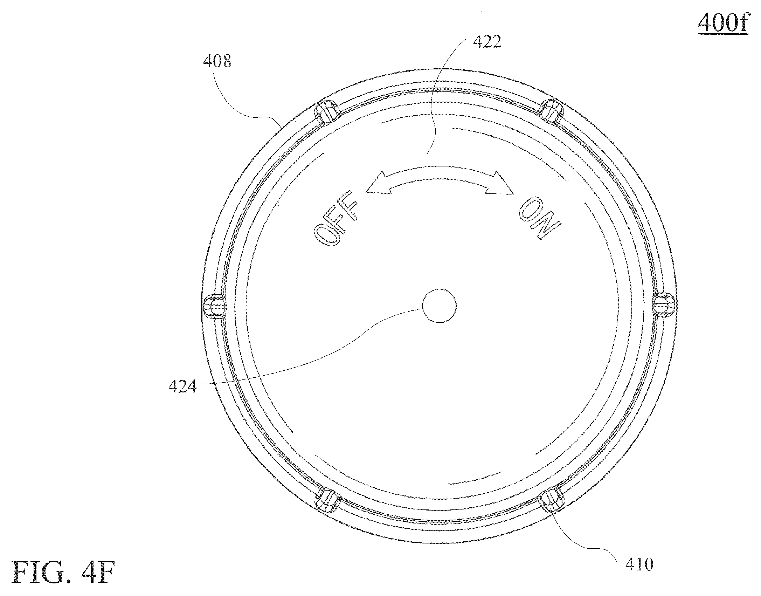

FIG. 4F shows a bottom view 400f of an embodiment of the end cap 408. The embodiment of the end cap 408 shown in FIG. 4F includes at least the end cap 408, tabs 410, markings 422, and an indent 424. In other embodiments, the embodiment shown in the view 400f may not include all of the components listed and/or may include other components in addition to or instead of those listed above.

FIG. 4F shows a bottom view 400f of an embodiment of the end cap 408. FIG. 4F shows markings 422 showing directions toward which the end cap 408 may be detached and connected.

Indent 424 is an indent located in the center of the bottom of the end cap 408. Indent 424 is optional and is decorative.

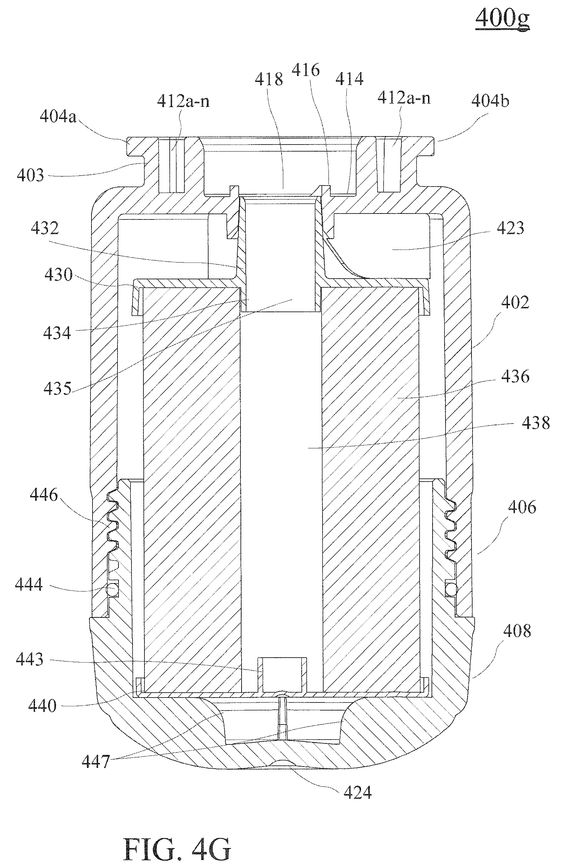

FIG. 4G shows a cross-sectional side view 400g of an embodiment of the filter unit 400a. The embodiment of the filter unit 400a shown in FIG. 4G includes at least the housing 402, neck 403, tabs 404a and 404b, indentations 406, end cap 408, cavities 412a-n, surface 414, embossments 416, opening 418, fins 423, indent 424, a filter cap 430, a top protrusion 432, a bottom protrusion 434, an opening 435, a filter 436, an inner channel 438, a filter base 440, a protrusion 443, an o-ring 444, threads 446, and fins 447. In other embodiments, the embodiment shown in the view 400g may not include all of the components listed and/or may include other components in addition to or instead of those listed above.

FIG. 4G shows a cross-sectional side view 400g of an embodiment of the filter unit 400a that encloses the filter media. Filter cap 430, top protrusion 432, bottom protrusion 434, opening 435, filter 436, inner channel 438, filter base 440, protrusion 443, o-ring 444, and threads 446 may be embodiments of the Filter cap 240, top protrusion 242, bottom protrusion 244, filter 246, inner channel 248, filter base 250, protrusion 258, o-ring 254, and threads 256, respectively, which were discussed in conjunction with FIGs. 2A and 2B. In at least one embodiment, the filter 436 is securely installed between the filter cap 430 and the filter base 440, separating a space in-between the filter 436 and the housing 402 that receives incoming unfiltered fluid and a space in the inner channel 438 that directs filtered fluid out of the filter unit. The unfiltered fluid surrounding the filter 436 passes through, in the process of being filtered by, the filter 436, and subsequently enters the inner channel 438.

Opening 435 is an opening at the bottom protrusion 434 that is coupled to the inner channel 438 in the filter 436, so as to allow fluids to flow from inner channel 438 through opening 435. In at least one embodiment, the filtered fluid runs from the inner channel 438, via the opening 435, to the outlet conduit of the manifold that is inserted into the top protrusion 432.

Fins 447 are a plurality of fins that extend from the inner bottom side of the cavity in the end cap 408, facing toward the filter. In an embodiment, the fins 447 contact and support the filter base 440 while the filter unit 400a is fully assembled.

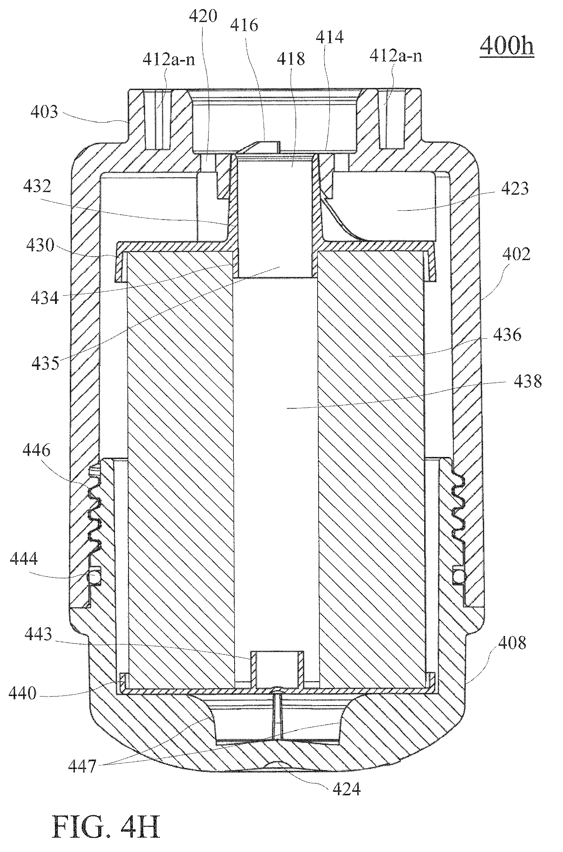

FIG. 4H shows another cross-sectional side view 400h of the filter unit 400a. The embodiment of the filter unit 400a shown in FIG. 4H includes at least the housing 402, neck 403, end cap 408, cavities 412a-n, surface 414, embossments 416, opening 418, holes 420, fins 423, indent 424, filter cap 430, top protrusion 432, bottom protrusion 434, opening 435, filter 436, inner channel 438, filter base 440, protrusion 443, o-ring 444, threads 446, and fins 447. In other embodiments, the embodiment shown in the view 400h may not include all of the components listed and/or may include other components in addition to or instead of those listed above.

FIG. 4H shows another cross-sectional side view 400h that is approximately 90 degrees relative to the cross-sectional side view 400g. FIG. 4H shows one of the embossments 416 and the pair of holes 420 on the surface 414.

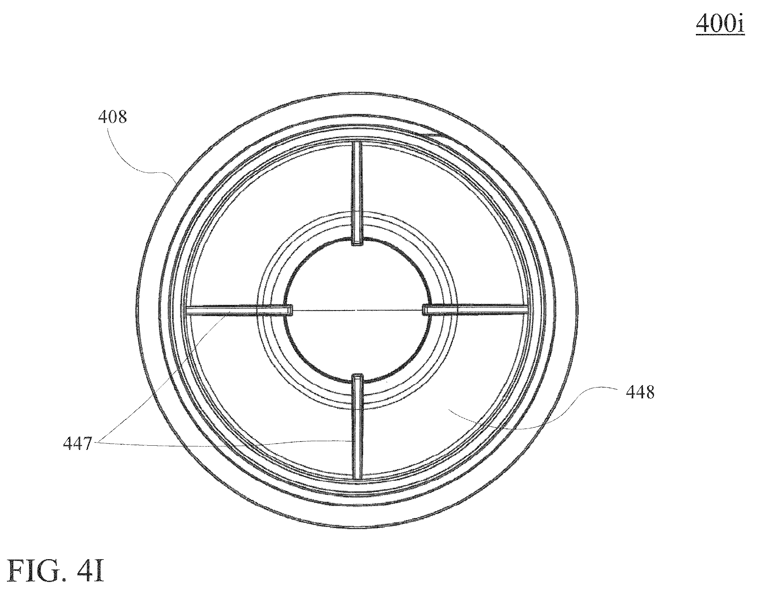

FIG. 4I shows a top view 400i of an embodiment of the end cap 408. The embodiment of the end cap 408 shown in FIG. 4I includes at least the end cap 408, fins 447, and cavity 448. In other embodiments, the embodiment shown in the view 400i may not include all of the components listed and/or may include other components in addition to or instead of those listed above.

FIG. 4I shows a top view 400i of an embodiment of the end cap 408. Cavity 448 is an embodiment of the cavity 257 that was discussed in conjunction with FIG. 2B. Although FIG. 4I shows four fins 447 extending from the inside of the end cap 408, other numbers and/or shapes of fins or other structures may be used to support the filter base or the filter.

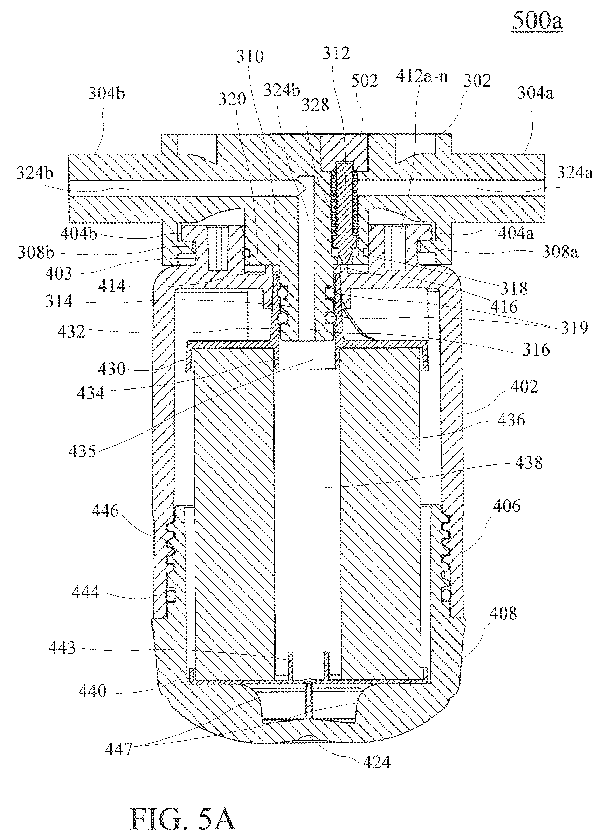

FIG. 5A shows a cross-sectional side view of an embodiment of a fluid filter system 500a. Fluid filter system 500a includes at least the collar 302, inlet port 304a, outlet port 304b, tabs 308a and 308b, core member 310, valve 312, outlet conduit 314, outlet opening 316, o-ring 318, o-rings 319, inlet channel 324a, outlet channel 324b, spring 328, housing 402, neck 403, tabs 404a and 404b, indentations 406, end cap 408, cavities 412a-n, surface 414, embossments 416, indent 424, filter cap 430, top protrusion 432, bottom protrusion 434, opening 435, filter 436, inner channel 438, filter base 440, protrusion 443, o-ring 444, threads 446, and fins 447. FIG. 5A further shows a cap 502 that may be an embodiment of the cap 232 as discussed in conjunction with FIGs. 2A and 2B. In other embodiments, the fluid filter system 500a may not include all of the components listed and/or may include other components in addition to or instead of those listed above.

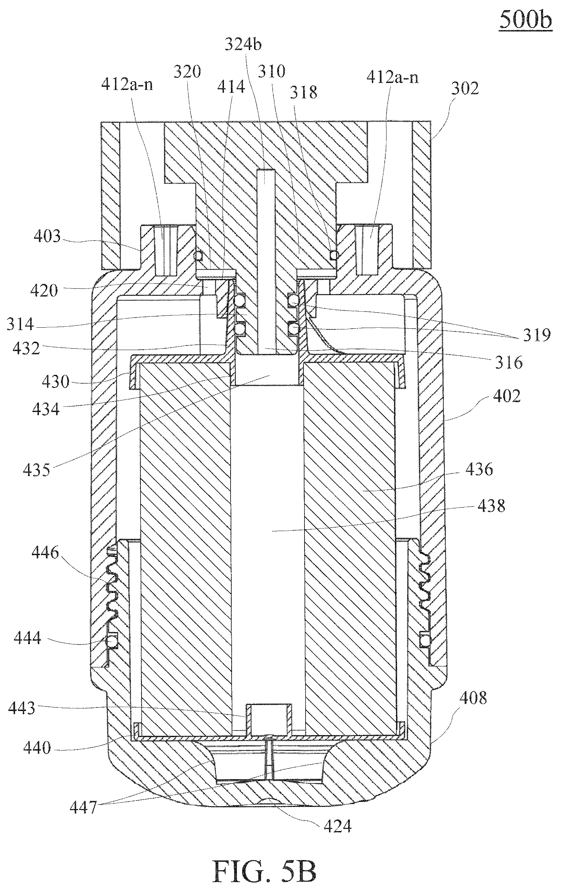

FIG. 5A shows a cross-sectional side view of a fluid filter system 500a that includes the manifold 300a and the filter unit 400a, which were discussed in conjunction with FIGs. 3A-3B and FIGs. 4A-4I, respectively. In contrast to FIGs. 4G and 4H, where a cross section of the filter unit was shown without the manifold attached, in FIGs. 5A and 5B, the manifold is attached. As filter unit 400a is screwed in to the manifold 300a, manifold 300a engages the filter unit 400a, and one of the embossments 416 pushes the valve 312 upwards, which in-turn opens a flow path through the inlet opening 313 (FIGs. 3A and 3B) on the surface 320 of the core member 310 (FIG. 3A and 3B). In at least one embodiment, the unfiltered fluid runs through the inlet channel 324a of the inlet port 304a into the channel in the core member 310, in which the valve 312 is located. The unfiltered fluid then passes through the inlet opening 313, which is opened by the valve 312, into a space between the surface 320 of the core member 310 and the surface 414 that includes holes 420. The unfiltered fluid then passes through the holes 420 on the surface 414 into the space inside the housing 402 surrounding the filter 436. The unfiltered fluid is distributed to the outside surface of the filter 436 so that the entire cross section of the filter 436 is used in the filtering process. The fluid is filtered as the fluid passes through the filter 436, and the filtered fluid is collected in the inner channel 438 and is then directed through the opening 316 of the outlet conduit 314 to the outlet channel 324b, out of the outlet port 304b.

FIG. 5B shows another cross-sectional side view 500b of an embodiment of the fluid filter system 500a of FIG. 5A. The embodiment of the fluid filter system 500a shown in FIG. 5B includes at least the collar 302, core member 310, outlet conduit 314, outlet opening 316, o-ring 318, o-rings 319, outlet channel 324b, housing 402, neck 403, end cap 408, cavities 412a-n, surface 414, holes 420, indent 424, filter cap 430, top protrusion 432, bottom protrusion 434, opening 435, filter 436, inner channel 438, filter base 440, protrusion 443, o-ring 444, threads 446, and fins 447. In other embodiments, the embodiment shown in the view 500b may not include all of the components listed and/or may include other components in addition to or instead of those listed above.

FIG. 5B shows another cross-sectional side view 500b that is approximately 90 degrees relative to the cross-sectional side view of FIG. 5A. FIG. 5B shows the pair of holes 420 on the surface 414 that allow inlet fluid to flow into the filter unit of the fluid filter system 500a. As mentioned above in conjunction with FIG. 5A, in contrast to FIGs. 4G and 4H, where a cross section of the filter unit was shown without the manifold attached, in the cross section of FIGs. 5A and 5B, the manifold is attached.

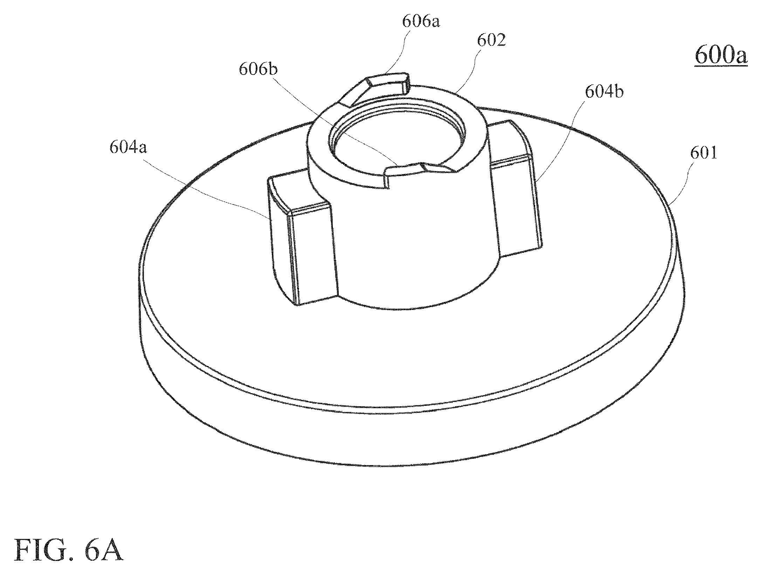

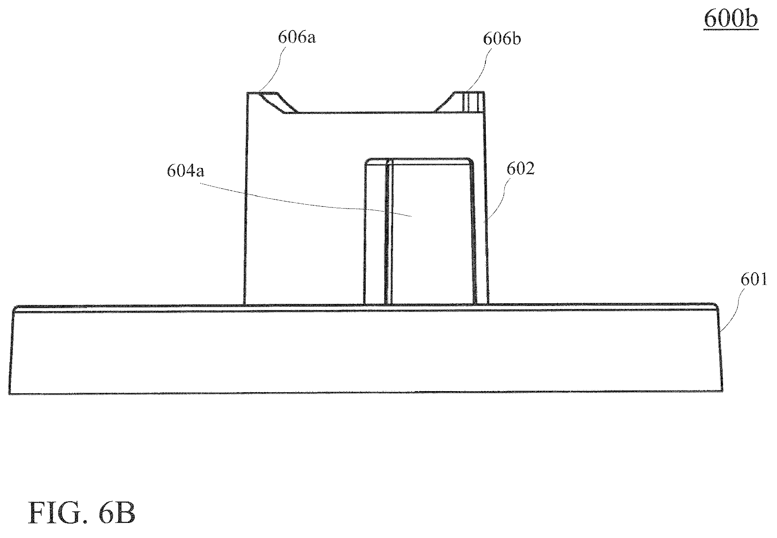

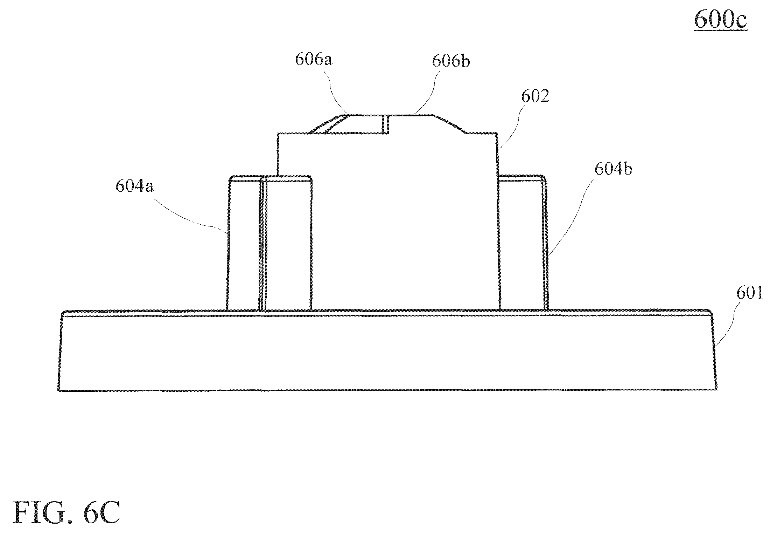

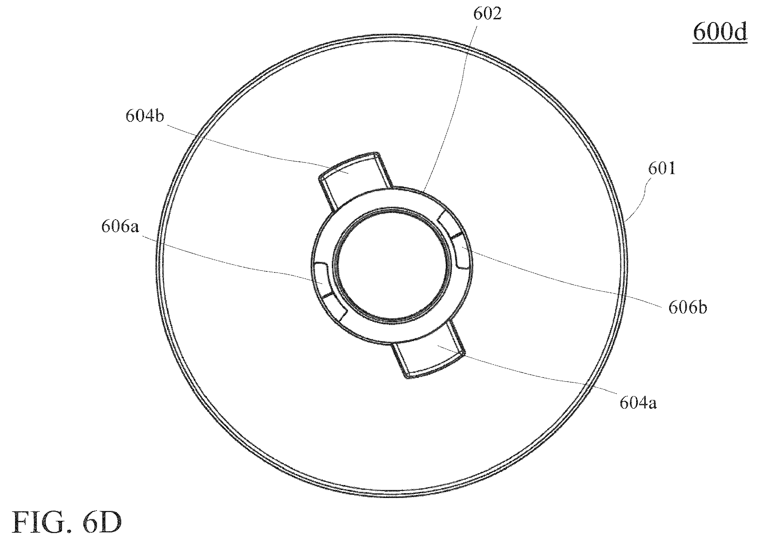

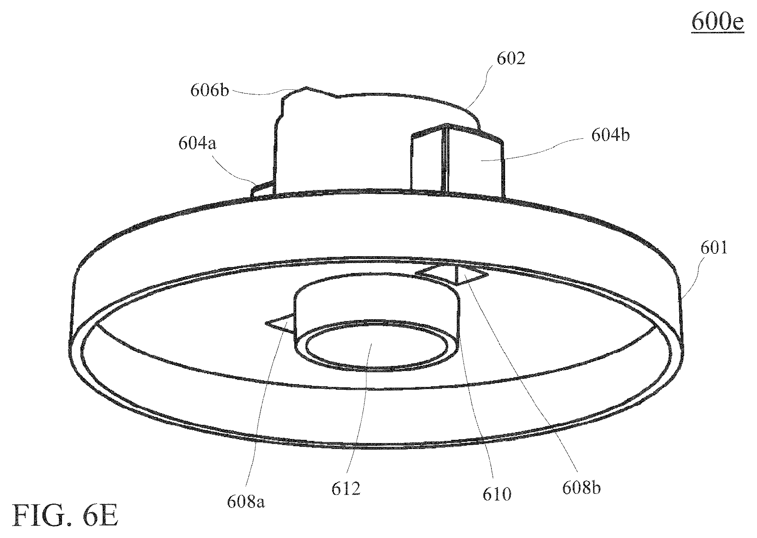

FIG. 6 shows a diagram of an embodiment of a filter cap 600 that includes embossments on the top. Filter cap 600 includes at least a dish 601, a protrusion 602, shoulders 604a and 604b, and embossments 606a and 606b. In other embodiments, the filter cap 600 may not include all of the components listed and/or may include other components in addition to or instead of those listed above.

FIG. 6A shows an embodiment of a filter cap 600 that includes embossments for pushing up the valve 312 in the manifold 300a, for example. In at least one embodiment, instead of placing embossments 416 on the surface at the top of the housing 402, the embossments may be molded on the top of the filter cap that is inserted to an opening at the top of the housing.

Dish 601 is a dish shaped structure of the filter cap 600a that is fitted on the top of the filter. In an embodiment, the dish 601 includes a rim having an outer edge extending downwardly for holding the filter in place.

Protrusion 602 is a tubular structure that protrudes from the top of the dish 601 facing the manifold when assembled. In at least one embodiment, the top portion of the protrusion 602 is fitted into an opening at the top of the housing. The outlet conduit 314 (FIG. 3B) of the manifold is inserted into the opening from the top of the protrusion 602 so as to couple the protrusion 602 to the outlet conduit, so that fluids can flow between the outlet conduit 314 in manifold and the top protrusion 602.

Shoulders 604a and 604b keep filter cap 604 aligned so that one of the embossments aligns with valve 312 when the filter unit is attached to the manifold. Shoulders 604a and 604b may be two structures connected to the sides of the protrusion 602 and extending upwardly from the dish 601. In at least one embodiment, the height of the shoulders 604a and 604b is smaller than the height of the protrusion 602. In at least one embodiment, the shoulders 604a and 604b are fitted into two grooves inside the housing while the top portion protrudes from the opening at the top of the housing, so that the filter cap 600a rotate together with the housing of the filter system.

Embossments 606a and 606b are raised embossments located on the top surface of the protrusion 602, facing upwards and including ramps. In at least one embodiment, the embossments 606a and 606b on the top of the protrusion 602 are inserted in the opening at the top of the housing, and as the manifold is screwed on and the manifold engages with the filter unit, one of the embossment 606a or 606b push the valve upwards, forming a flow path through the inlet opening 313. In at least one embodiment, the valve is depressed by riding up the ramp on either of the embossments 606a and 606b, so as to open the valve. Although FIG. 6A shows a pair of diametrically opposed embossments, other numbers and/or shapes of embossments may be molded on the top of the protrusion 602 in alternative embodiments.

FIG. 6B shows a side view of an example of assembly 600b of an embodiment of the filter cap 600a. The embodiment of the filter cap 600a shown in FIG. 6B includes at least the dish 601, protrusion 602, shoulder 604a, and embossments 606a and 606b. In other embodiments, the embodiment shown in the view 600b may not include all of the components listed and/or may include other components in addition to or instead of those listed above.

FIG. 6B shows a side view of assembly 600b of an embodiment of the filter cap 600a with the shoulder 604a visible. FIG. 6B shows the diametrically opposed embossments 606a and 606b extending from the top of the protrusion 602.

FIG. 6C shows another side view 600c of an embodiment of the filter cap 600a. The embodiment of the filter cap 600a shown in FIG. 6C includes at least the dish 601, protrusion 602, shoulders 604a and 604b, and embossments 606a and 606b. In other embodiments, the embodiment shown in the view 600c may not include all of the components listed and/or may include other components in addition to or instead of those listed above.

FIG. 6C shows another side view 600c of the filter cap 600a with both shoulders 604a and 604b visible.

FIG. 6D shows a top view 600d of an embodiment of the filter cap 600a. The embodiment of the filter cap 600a shown in FIG. 6D includes at least the dish 601, protrusion 602, shoulders 604a and 604b, and embossments 606a and 606b. In other embodiments, the embodiment shown in the view 600d may not include all of the components listed and/or may include other components in addition to or instead of those listed above.

FIG. 6D shows a top view 600d of the filter cap 600a, with the embossments 606a and 606b opposing each other, while the shoulders 604a and 604b are located at opposite side of the protrusion 602. In an embodiment, either of the shoulders 604a and 604b is approximately 90 degrees from either of the embossments 606a and 606b.

FIG. 6E shows another view 600e of an embodiment of the filter cap 600a. The embodiment of the filter cap 600a shown in FIG. 6E includes at least the dish 601, protrusion 602, shoulder 604a, embossment 606b, cavities 608a and 608b, a bottom protrusion 610, and an opening 612. In other embodiments, the embodiment shown in the view 600e may not include all of the components listed and/or may include other components in addition to or instead of those listed above.

FIG. 6E shows another view 600e of the filter cap 600a showing the bottom side of the filter cap 600a.

Cavities 608a and 608b are empty spaces in the shoulders 604a and 604b, respectively, which opens at the bottom and faces downward. Cavities 608a and 608b are optional, and could be filled in.

Bottom protrusion 610 is a tubular structure that protrudes from the bottom side of the dish 601. In at least one embodiment, the bottom protrusion 610 is sized to fit in the inner channel of the filter, so as to hold the filter in place while the filter unit is in use and directs the filtered fluid to the outlet conduit of the manifold that is inserted into the protrusion 602.

Opening 612 is an opening of the bottom protrusion 610. In an embodiment, the opening 612 is couple to the inner channel of the filter.

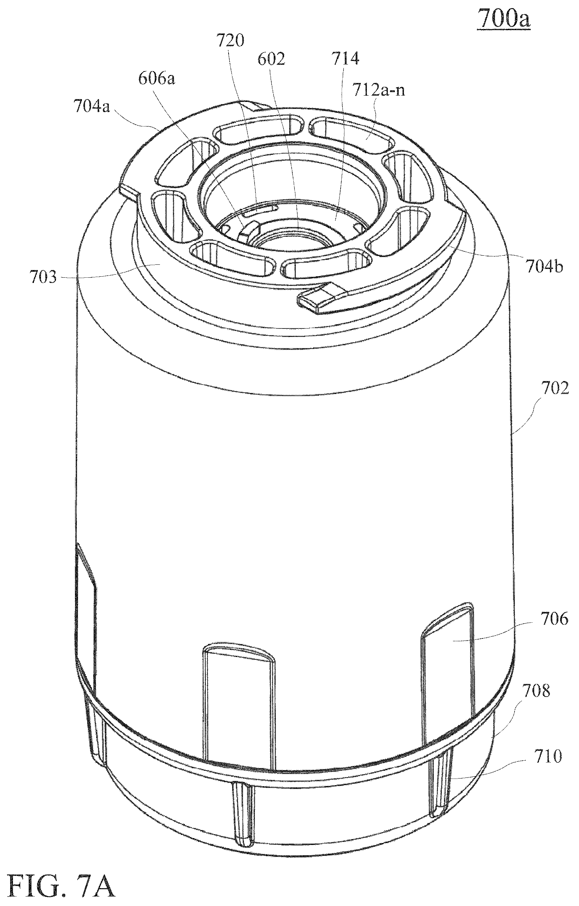

FIG. 7A shows a diagram of another embodiment of a filter unit 700a of a fluid filter system. The filter unit 700a includes at least protrusion 602, embossment 606a, a housing 702, a neck 703, tabs 704a and 704b, indentations 706, an end cap 708, tabs 710, cavities 712a-n, a surface 714, and holes 720. In other embodiments, the filter unit 700a may not include all of the components listed and/or may include other components in addition to or instead of those listed above.

FIG. 7A shows a diagram of a filter unit 700a that may be used as an alternative to the filter unit 400a that was discussed in conjunction with FIGs. 4A-4I. Filter unit 700a has the embossments on the filter cap rather on the housing of the filter unit. In at least one embodiment, the filter unit 700a may be removably connected to either of the manifold 101, 201, and 300a to form a fluid filter system.

Housing 702 is the housing of the filter unit 700a that encloses the filter media and is sealed by an end cap. Neck 703, tabs 704a and 704b, indentations 706, end cap 708, tabs 710, cavities 712a-n are similar to the neck 403, tabs 404a and 404b, indentations 406, end cap 408, tabs 410, cavities 412a-n, respectively, which were discussed in conjunction with FIGs. 4A-4I.

Surface 714 is an annular surface inside the neck 703, and surface 714 surrounds an opening into which the outlet conduit 314 of the manifold 300a, for example, is inserted. In at least one embodiment, the outer diameter of the surface 714 is slightly larger than the outer diameter of the core member 310 of the manifold 300a. The surface 714 includes a plurality of holes 720 that permit inlet fluid (e.g., the inlet fluid that pass the inlet opening when the valve is open) to pass toward into a chamber just outside of the filter of filter unit 700a. Holes 720 are similar to holes 420, which were discussed in conjunction with FIGs. 4A, 4D, and 4H.

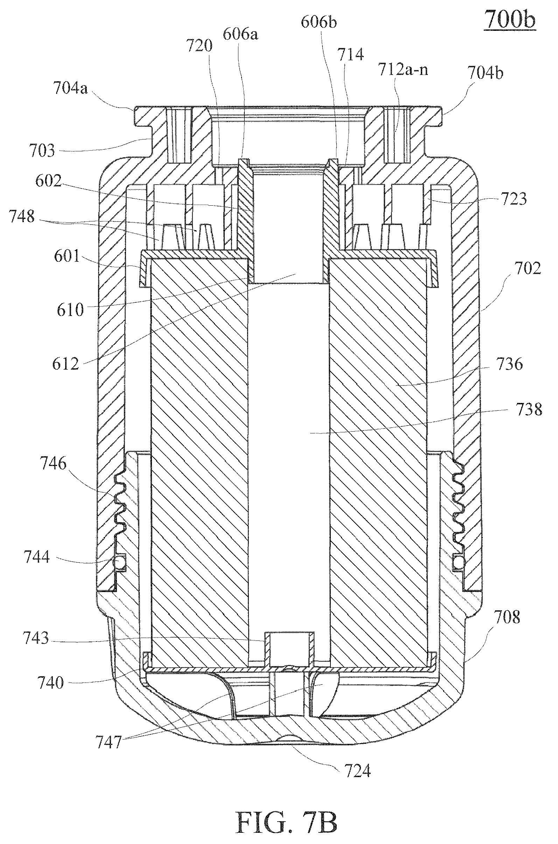

FIG. 7B shows a cross-sectional side view 700b of an embodiment of the filter unit 700a of FIG. 7A. The embodiment of the filter unit 700a shown in FIG. 7B includes at least the dish 601, protrusion 602, embossments 606a and 606b, bottom protrusion 610, opening 612, housing 702, neck 703, tabs 704a and 704b, end cap 708, cavities 712a-n, surface 714, holes 720, walls 723, an indent 724, a filter 736, an inner channel 738, a filter base 740, a protrusion 743, an o-ring 744, threads 746, and fins 747. In other embodiments, the embodiment shown in the view 700b may not include all of the components listed and/or may include other components in addition to or instead of those listed above.

FIG. 7B shows a cross-sectional side view 700b of an embodiment of the filter unit 700a that holds a filter inside. Indent 724, filter 736, inner channel 738, filter base 740, protrusion 743, o-ring 744, threads 746, and fins 747 may be embodiments of the indent 424, filter 436, inner channel 438, filter base 440, protrusion 443, o-ring 444, threads 446, and fins 447, respectively, which were discussed in conjunction with FIGs. 4A-4I. FIG. 7B shows that the top of the protrusion 602 are inserted into the opening surrounded by the surface 714, while the embossments 606a and 606b extend upwards beyond the level of the surface 714.

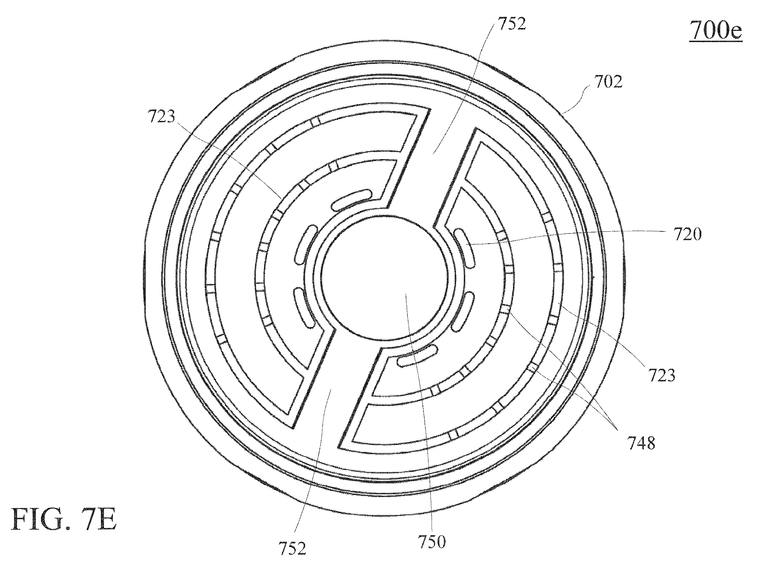

Walls 723 are a plurality of partitions inside the housing 702 that extend from the inside top of the housing 702. In at least one embodiment, walls 723 form a supporting structure to hold and support the filter cap 601 so that the filter cap 601 rotates together with the housing 702. Detail structure of the walls 723 will be discussed in conjunction with FIG. 7E.

Slits 748 are slits at the bottom of the three layers of walls of the wall 723, allowing inlet fluid to pass to enter the space surrounding the filter 736 in the housing 702.

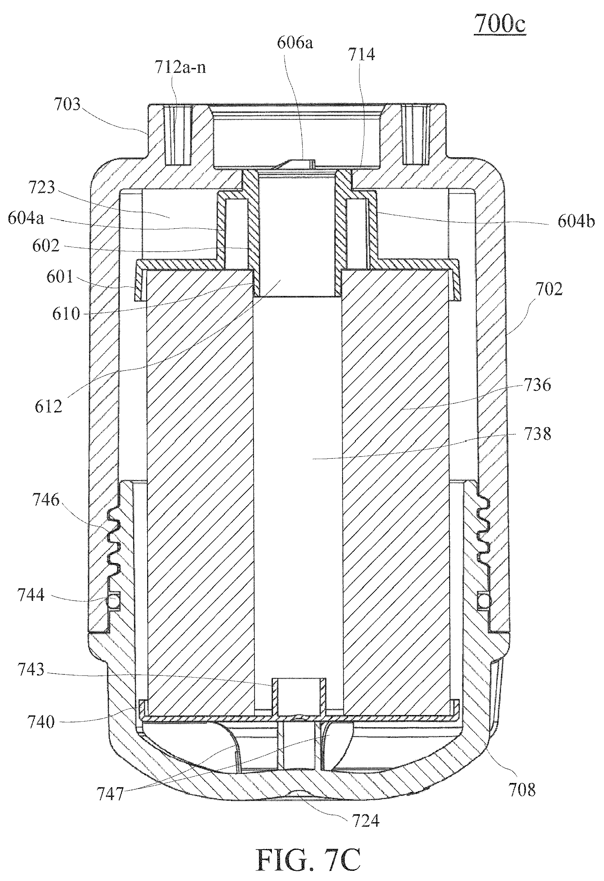

FIG. 7C shows another cross-sectional side view 700c of an embodiment of the filter unit 700a of FIG. 7A. The embodiment of the filter unit 700a shown in FIG. 7C includes at least the dish 601, protrusion 602, embossment 606a, bottom protrusion 610, opening 612, housing 702, neck 703, end cap 708, cavities 712a-n, surface 714, walls 723, indent 724, filter 736, inner channel 738, filter base 740, protrusion 743, o-ring 744, threads 746, and fins 747. In other embodiments, the embodiment shown in the view 700c may not include all of the components listed and/or may include other components in addition to or instead of those listed above.

FIG. 7C shows another cross-sectional side view 700c that is approximately 90 degrees relative to the cross-sectional side view 700b. FIG. 7C shows both shoulders 604a and 604b fitted in grooves formed by the walls 723.

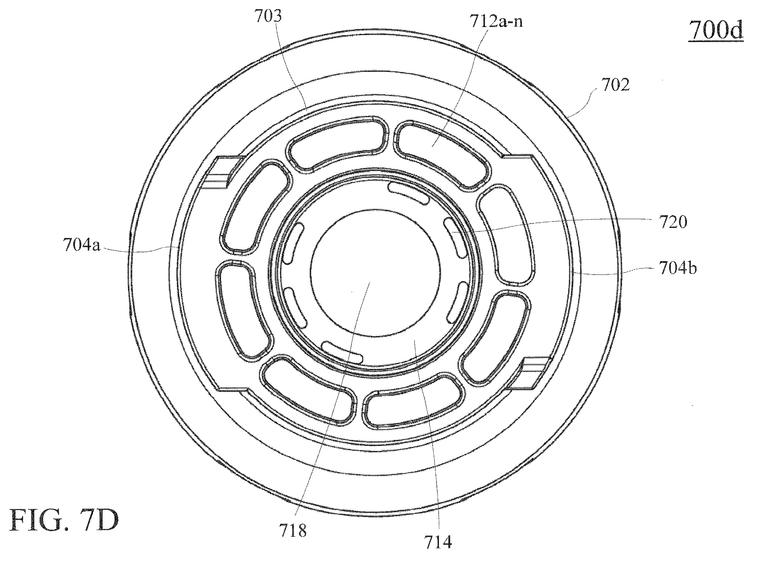

FIG. 7D shows a top view 700d of an embodiment of the housing 702 of the filter unit 700a of FIG. 7A. The embodiment of housing 702 shown in FIG. 7D includes at least the housing 702, neck 703, tabs 704a and 704b, cavities 712a-n, surface 714, holes 720, and an opening 750. In other embodiments, the embodiment shown in the view 700d may not include all of the components listed and/or may include other components in addition to or instead of those listed above.

FIG. 7D shows a top view 700d of an embodiment of the housing 702.

Opening 750 is the opening surrounded by the surface 714, into which the top part of the protrusion 602 is inserted. Although FIG. 7D shows six holes 720 on the surface 714, other numbers and/or shapes of penetrations may be used in alternative embodiments. Also holes 720 may have any shape and are not limited to the shape shown in FIG. 7D.

FIG. 7E shows a bottom view 700e of an embodiment of the housing 702 of FIG. 7D. The embodiment of housing 702 shown in FIG. 7E includes at least holes 720, walls 723, slits 748, opening 750, and grooves 752. In other embodiments, the embodiment shown in the view 700e may not include all of the components listed and/or may include other components in addition to or instead of those listed above.

FIG. 7E shows a bottom view 700e of an embodiment of the inside of the housing 702. FIG. 7E shows the walls of the walls 723 extending from the inside portion of the housing 702. The walls 723 include two half portions, each having three layers of walls each layer having a shape that is a portion of a circle. The ends of the three layers of walls on either side of the opening 750 are connected by end walls. The holes 720 are located between the two layers of walls that are near the opening 750.

Grooves 752 are two grooves located on either side of the opening 750, formed between the end walls of the walls 723. In at least one embodiment, the shoulders 604a and 604b fit into the grooves 752 while the protrusion 602 is inserted in the opening 750.

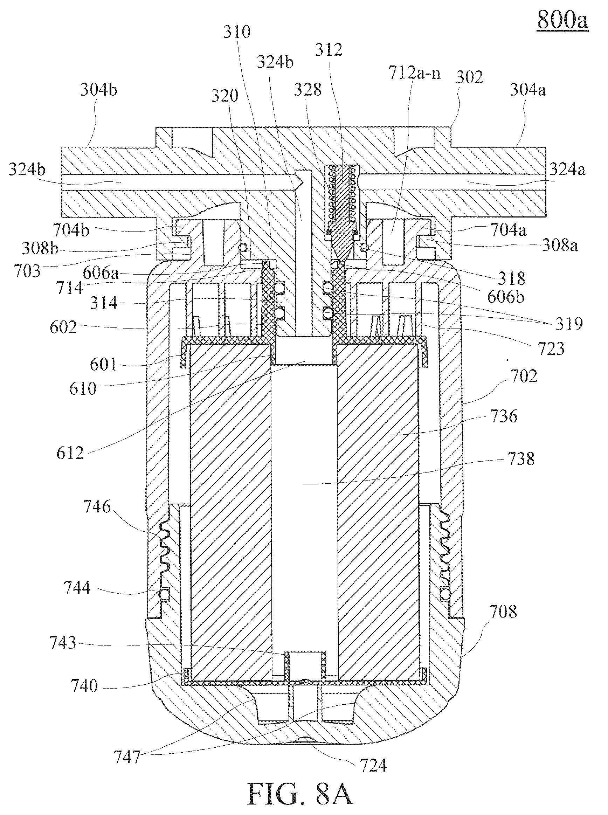

FIG. 8A shows a cross-sectional side view of an embodiment of a fluid filter system 800a that includes the filter unit 700a of FIG. 7A. Fluid filter system 800a includes at least the collar 302, inlet port 304a, outlet port 304b, tabs 308a and 308b, core member 310, valve 312, outlet conduit 314, o-ring 318, o-rings 319, inlet channel 324a, outlet channel 324b, spring 328, dish 601, protrusion 602, embossments 606a and 308b, bottom protrusion 610, opening 612, housing 702, neck 703, end cap 708, cavities 712a-n, surface 714, walls 723, indent 724, filter 736, inner channel 738, filter base 740, protrusion 743, o-ring 744, threads 746, and fins 747. In other embodiments, the fluid filter system 800a may not include all of the components listed and/or may include other components in addition to or instead of those listed above.

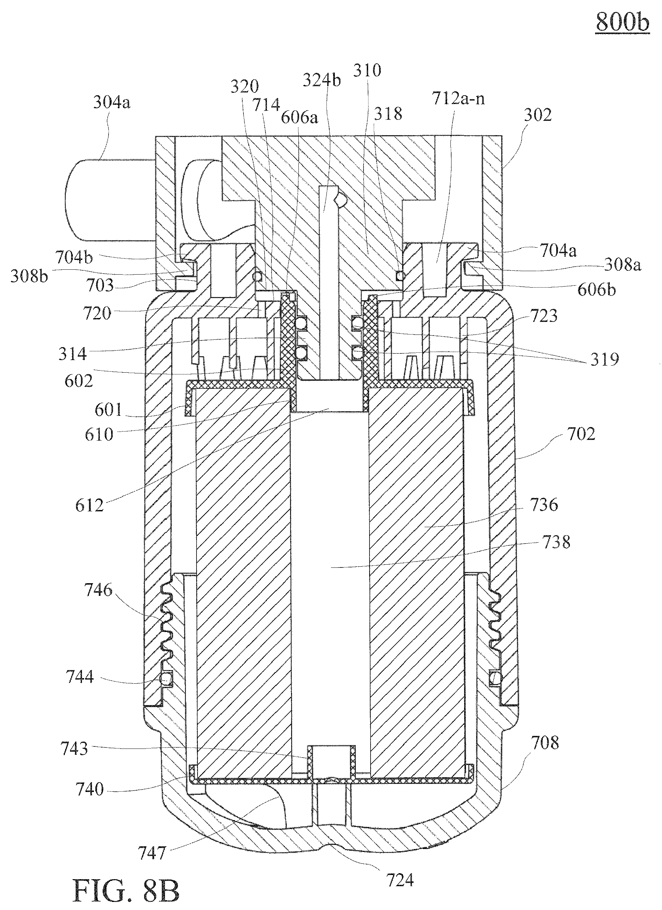

FIG. 8A shows a cross-sectional side view of an embodiment of a fluid filter system 800a that includes the manifold 300a and the filter unit 700a, which were discussed in conjunction with FIGs. 3A-3B and FIGs. 7A-7E, respectively. In other words, whereas FIGs. 7C and 7D show cross sectional views of filter unit 700a disconnected to manifold 300a, FIGs. 8A and 8B show cross sectional views of filter unit 700a connected to manifold 300a. As the filter unit 700a is screwed in and engages with the manifold 300a, either of the embossments 606a and 606b on the top of the protrusion 602 pushes the valve 312 up and opens a flow path through the inlet opening 313 on the surface 320 of the core member 310. In at least one embodiment, the unfiltered fluid runs into the inlet channel 324a, through the inlet opening 313 into a space between the surface 320 of the core member 310 and the surface 714 that includes holes 720. The unfiltered fluid then passes through the holes 720 into the space inside the housing 702 surrounding the filter 736. The fluid is filtered as the fluid passes through the filter 736, and filtered fluid is collected in the inner channel 738 and is then directed through the opening 612 to the outlet channel in the outlet conduit 314, and then out of the outlet port 304b.

FIG. 8B shows another cross-sectional side view 800b of an embodiment of the fluid filter system 800a of FIG. 8A. The embodiment of the fluid filter system 800a shown in FIG. 8B includes at least the collar 302, inlet port 304a, tabs 308a and 308b, core member 310, outlet conduit 314, o-ring 318, o-rings 319, outlet channel 324b, dish 601, protrusion 602, embossments 606a and 606b, bottom protrusion 610, opening 612, housing 702, neck 703, end cap 708, cavities 712a-n, surface 714, walls 723, indent 724, filter 736, inner channel 738, filter base 740, protrusion 743, o-ring 744, threads 746, and fins 747. In other embodiments, the embodiment shown in the view 800b may not include all of the components listed and/or may include other components in addition to or instead of those listed above.

FIG. 8B shows another cross-sectional side view 800b that is approximately 90 degrees relative to the cross-sectional side view of FIG. 8A. FIG. 8B shows the holes 720 on the surface 714 that allow inlet fluid to flow into the filter unit 700a of the fluid filter system 800a.

### METHOD OF USE

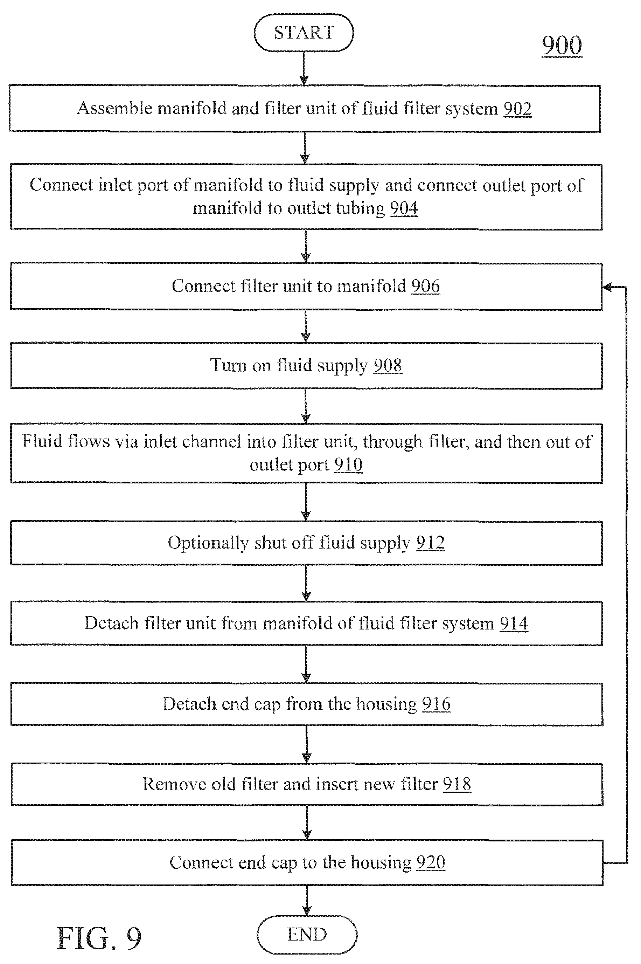

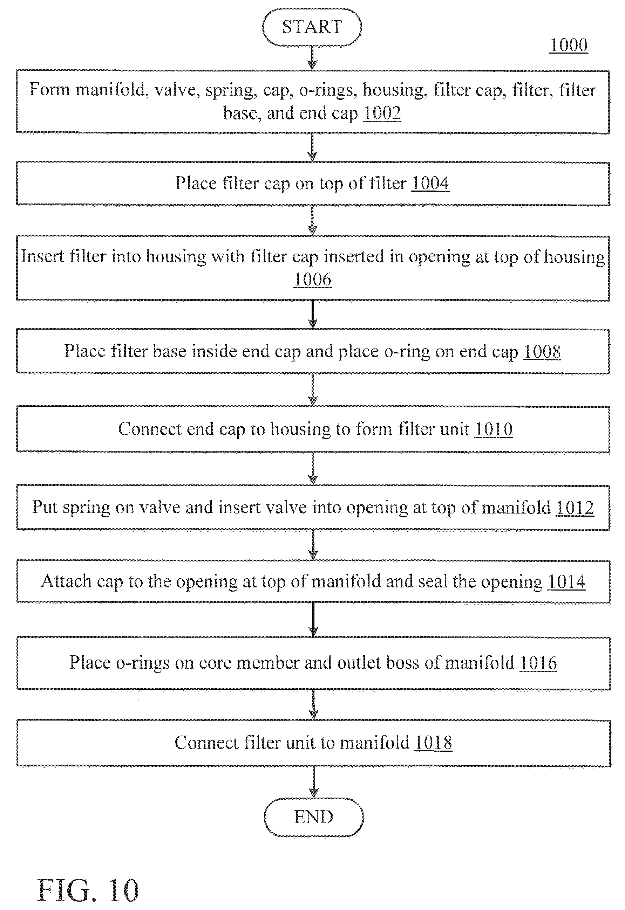

FIG. 9 is a flowchart of an embodiment of a method 900 of using the fluid filter system. The fluid filter system mentioned in FIGs. 9 and 10 may be any of the embodiments of the fluid filter systems in this specification.

In step 902, the manifold and the filter unit of the fluid filter system are assembled.

In step 904, the inlet port is connected to the fluid supply and the outlet port is connected to the outlet tubing.

In step 906, the filter unit is connected to the manifold.

In step 908, the fluid supply is turned on.

In step 910, the fluid flows via the inlet channel in the manifold, and then into the filter unit of the fluid filter system, next passing through the filter, and then into the outlet channel and out of the outlet port of the manifold.

In optional step 912, the fluid supply is shut off. In at least one embodiment, while the filter unit is rotated (for detaching the filter unit, e.g.), the embossments are moved away from the valve, so that the valve is biased to closing the inlet opening and thereby prevents fluid from leaking through the inlet opening, even if the fluid supply is kept on. In an embodiment of the filter cap having embossments on the top (e.g., the filter cap 600a as shown in FIGs. 6A-8B), as the end cap is screwed away from the housing, the filter cap is released from pressing on the valve, and therefore the valve is closed to prevent fluid from leaking. Thus, it is not required to turn off the fluid supply to change the filter.

In step 914, the filter unit is detached from the manifold. As part of the step 914, as the filter unit is rotated, one of the embossments (e.g., embossments 416 or 606a and 606b), which previously pushes up the valve, is moved away from the valve, and thereby the valve is biased to block the inlet opening to prevent leakage.

In step 916, the end cap of the filter unit is detached from the housing. Optionally as part of the step 916, the filter base is also removed. In an embodiment, the filter base is optional and part of the end cap may serve as the base for supporting the filter.

In step 918, the old/used filter is removed from the housing and a new filter is inserted into the housing in place of the old filter. The optional filter base may be placed at the bottom of the new filter before the end cap is attached.

In step 920, the end cap is connected to the housing. In at least one embodiment, after the step 920, the method 900 may proceed to the step 906 to start filtering the fluid using the new filter. In at least one embodiment, steps 912 to 920 are used to replace the filter and/or for maintenance, and may be performed when necessary (e.g., at a certain frequency, such as every few days, weeks, months, or years). Alternatively, the steps 916-920 may be replaced by one step in which a new filter unit/filter cartridge is connected to the manifold. For example, after changing the filter multiple times, while still reusing the same filter unit, it may be desirable to replace the filter unit also.

In an embodiment, each of the steps of method 900 is a distinct step. In another embodiment, although depicted as distinct steps in FIG. 9, steps 902-920 may not be distinct steps. In other embodiments, method 900 may not have all of the above steps and/or may have other steps in addition to or instead of those listed above. The steps of method 900 may be performed in another order. Subsets of the steps listed above as part of method 900 may be used to form their own method.

### METHOD OF ASSEMBLY

FIG. 10 is a flowchart of an embodiment of a method 1000 of making the fluid filter system.

In step 1002, the manifold (e.g., manifold 101, 201, 300a), valve (e.g., the valve 212a or 312), spring (e.g., the spring 234 or 328), cap (e.g., the cap 232 or 502), o-rings (e.g., the o-rings 118/218/318, 119/219/319, 236, and 254/444/744), housing (e.g., the housing 122, 222, 402, or 702), filter cap (e.g., the filter cap 240, 300a, or 600a), filter (e.g., the filter 246, 436, or 736), filter base (e.g., the filter base 250, 440, or 740), and end cap (e.g., the end cap 228, 408, or 708) are formed.

In step 1004, the filter cap is placed on top of the filter.

In step 1006, the filter and filter cap are inserted into the housing, with the filter cap inserted in the opening at the top of the housing. In an embodiment, the step 1006 may include inserting the filter 436 and filter cap 300a into the opening 418 of the housing 402 (to make the filter system 500a), or alternatively inserting the filter 736 and filter cap 600a into the opening 750 of the housing 702 (to make the filter system 800a).

In step 1008, the filter base is placed inside the end cap and the o-ring is placed on the end cap.

In step 1010, the end cap is connected to the bottom of the housing to form the filter unit.

In step 1012, the spring is put on the shaft of the valve, and the valve is inserted into the opening (e.g., the opening 260) from the top of the core member of the manifold.

In step 1014, the cap (e.g., the cap 232) is attached to the opening 260 so as to seal the opening 260 and provide support for the spring.

In step 1016, the o-rings are placed on the manifold. For example, the o-ring 118/218/318 is placed on the core member 110/210/310 and o-rings 119/219/319 are placed on the outlet conduit 114/214/314 of the manifold 101/201/300a.

In step 1018, the filter unit is connected to the manifold. In an embodiment, the step 1018 is performed after the manifold is connected to the fluid supply and outlet tubing.

The construction of the filter unit, steps 1004-1010, and the construction of the manifold, steps 1012-1016, could be performed in any order and/or in parallel within one another.

In an embodiment, each of the steps of method 1000 is a distinct step. In another embodiment, although depicted as distinct steps in FIG. 10, steps 1002-1018 may not be distinct steps. In other embodiments, method 1000 may not have all of the above steps and/or may have other steps in addition to or instead of those listed above. The steps of method 1000 may be performed in another order. Subsets of the steps listed above as part of method 1000 may be used to form their own method.

### ALTERNATIVES AND EXTENSIONS

In an alternative embodiment, instead of there being just two tabs, such as tabs 108, two tabs 124, two tabs 208, tabs 224a and 224b, tabs 308a and 308b, tabs 404a and 404b, and tabs 704a and 704b, there may be another number of tabs, and the tabs may be different lengths other than the lengths depicted in the FIGs. 1-8B. In an alternative embodiment, instead of just two embossments 416, and embossments 606a and 606b, there may be another number of embossments (e.g., one, three, four, five, six, seven, or eight) or the embossments may be replaced with a continuous ring. However, the location, length, and/or number of tabs 108, tabs 124, tabs 208, tabs 224a and 224b, tabs 308a and 308b, tabs 404a and 404b, and tabs 704a and 704b, and number, length and/or location of the embossments 416 and 606a and 606b, should be chosen to such that once the filter unit is attached to the manifold, at least one embossment is aligned with the valve to push the valve open. In an alternative embodiment, instead of tabs 108, tabs 124, tabs 208, tabs 224a, tabs 224b, threads 256, tabs 308a, tabs 308b, tabs 404a, tabs 404b, tabs 704a, 704b, threads 446, and/or threads 746 could be replaced with other types of fasteners, such as buckles, buttons, or snaps. In another embodiment, there may not be any embossments, and the valve may be opened and closed manually by the user. For example, just prior to removing the filter unit/filter cartridge and/or just prior to removing the filter from within in the filter unit/filter cartridge while the filter cartridge is still attached to the manifold, the user may push a switch that closes the valve, and just after installing the filter cartridge and filter the user may push a switch that opens the valve.

Each embodiment disclosed herein may be used or otherwise combined with any of the other embodiments disclosed. Any element of any embodiment may be used in any embodiment.

Aspects of embodiments of the invention are disclosed in the following Example Enumerated Embodiments (EEEs):
EEE 1: A filter system comprising: a housing of a filter unit that has a first end and a second end, the housing including a first opening on the first end and a second opening on the second end, the first opening and the second opening being different from each other, the first opening including at least a fastener for detachably engaging the housing with a manifold that includes a valve, the second opening being closed by a removable cap; a removable filter for filtering fluid, the removable filter being enclosed in the filter unit; and the removable cap that includes at least a fastener for attaching the removable cap to the second opening of the housing; wherein one or more embossments are located in the first opening for controlling opening and closing of the valve, wherein the removable cap is detachable from the second opening of the housing for replacing the removable filter in the filter unit.
EEE 2: The filter system of EEE 1, further comprising: a surface in the first opening of the housing, the one or more embossments extending from the surface facing the manifold, the surface including a plurality of holes; wherein the height of the one or more embossments is selected so as to push the valve when the filter unit is engaged with the manifold.
EEE 3: The filter system of EEE 2, the one or more embossments being equal angularly spaced on the surface in the first opening of the housing.
EEE 4: The filter system of EEE 2, the one or more embossments being two embossments separated approximately 180 degrees apart from each other.
EEE 5: The filter system of any of EEEs 1-4, further comprising: an o-ring that seals the removable cap that closes the second opening.
EEE 6: The filter system of any of EEEs 1-5, the filter unit further including a first space and a second space that are separated by the removable filter, the first space is on a first side of a wall of the removable filter and the second space is on a second side of the wall of the removable filter; the housing having at least two openings for fluid to enter and exit the filter unit, the at least two openings including at least one opening that directs fluid to enter the first space outside of the removable filter and the at least two openings including at least another opening via which fluid in the second space leaves the filter unit.
EEE 7: The filter system of any of EEEs 1-6, further comprising: a filter cap that is attached to one end of the removable filter, the filter cap including a through channel that has a first end and a second end, the first end of the through channel being inserted in the first opening of the housing, the second end of the through channel being connected to an opening in the filter unit.
EEE 8: The filter system of EEE 7, wherein the one or more embossments extend from the first end of the through channel of the filter cap.
EEE 9: The filter system of EEE 7 or EEE 8, the filter cap further comprising: one or more shoulders that fit into one or more grooves inside the housing for securing the filter cap in the housing.
EEE 10: The filter system of any of EEEs 1-9, the removable cap further comprising: a plurality of tabs extending from a peripheral of the removable cap for providing grip.
EEE 11: The filter system of any of EEEs 1-10, the removable cap further including screw threads that mate with screw threads at the second opening of the housing for connecting the removable cap to the housing.
EEE 12: The filter system of any of EEEs 1-11, the first opening of the housing further including tabs that mate with tabs on the manifold for connecting the housing to the manifold.
EEE 13: The filter system of any of EEEs 1-12, further comprising: the manifold that includes at least one inlet channel for directing fluid into the filter unit and one outlet channel for directing fluid out of the filter unit, the valve being mechanically biased to block the inlet channel of the manifold.
EEE 14: The filter system of EEE 13, the manifold further comprising: a surface facing the surface in the first opening of the housing, the surface including a bore that is connected to the inlet channel of the manifold, the valve protruding through the bore and being biased to blocking the bore; an outlet conduit extending from the surface of the manifold, the outlet conduit including a channel that opens at both ends, the channel being connected to the outlet channel of the manifold; wherein the surface of the manifold does not directly contact the surface in the first opening of the housing, wherein the outlet conduit is inserted into an opening surrounded by the surface in the first opening of the housing.
EEE 15: The filter system of EEE 14, further comprising: one or more o-rings for sealing the outlet conduit in the opening surrounded by the surface in the first opening of the housing.
EEE 16: The filter system of any of EEEs 13-15, wherein the valve is spring biased.
EEE 17: A method of using a filter system, the method comprising: detaching a filter unit of the filter system from a manifold, the filter unit including at least a housing that has a first end and a second end, the housing including a first opening on the first end and a second opening on the second end, the first opening and the second opening being different from each other, the first opening including at least a fastener for detachably engaging the housing with the manifold that includes a valve, the second opening being closed by a removable cap; a removable filter for filtering fluid, the removable filter being enclosed in the filter unit; and the removable cap that includes at least a fastener for attaching the removable cap to the second opening of the housing, wherein one or more embossments are located in the first opening for controlling opening and closing of the valve, wherein the removable cap is detachable from the second opening of the housing for replacing the removable filter in the filter unit; detaching the removable cap from the second opening of the housing; removing the filter from the housing and inserting a new filter into the housing; attaching the removable cap to the second opening to seal the second opening of the housing; and attaching the filter unit to the manifold.
EEE 18: A method of assembling a filter unit of a filter system, comprising: forming a housing of the filter unit that has a first end and a second end, the housing including a first opening on the first end and a second opening on the second end, the first opening and the second opening facing away from each other, the first opening including at least a fastener for detachably engaging the housing with a manifold that includes a valve, the housing including one or more embossments located in the first opening for controlling opening and closing of the valve; installing a filter through the second opening in the housing; and connecting a removable cap to the second opening of the housing and sealing the second opening; wherein the removable cap is detachable from the second opening of the housing for replacing the filter in the filter unit.
EEE 19: A replaceable filter element for a reusable filter system, comprising: a filter cap that is attached to one end of a removable filter media, the filter cap including at least an outlet conduit that connects with an outlet channel in a manifold for directing fluid away from the removable filter media, the outlet conduit of the filter cap including at least an inner surface that enhances a seal between the outlet conduit and the outlet channel to prevent fluid traveling from the outlet conduit to the outlet channel from leaking.
EEE 20: The replaceable filter element of EEE 19 further comprising the removable filter media.

Although the invention has been described with reference to specific embodiments, it will be understood by those skilled in the art that various changes may be made and equivalents may be substituted for elements thereof without departing from the true spirit and scope of the invention. In addition, modifications may be made without departing from the essential teachings of the invention.

## Claims

1. A filter system comprising:
a housing of a filter unit that has a first end and a second end, the housing including a first opening on the first end and a second opening on the second end, the first opening and the second opening being different from each other, the first opening including at least a fastener for detachably engaging the housing with a manifold that includes a valve, the second opening being closed by a removable cap;
a removable filter for filtering fluid, the removable filter being enclosed in the filter unit; and
the removable cap that includes at least a fastener for attaching the removable cap to the second opening of the housing;
wherein one or more embossments are located in the first opening for controlling opening and closing of the valve, wherein the removable cap is detachable from the second opening of the housing for replacing the removable filter in the filter unit.

2. The filter system of claim 1, further comprising:
a surface in the first opening of the housing, the one or more embossments extending from the surface facing the manifold, the surface including a plurality of holes;
wherein the height of the one or more embossments is selected so as to push the valve when the filter unit is engaged with the manifold.

3. The filter system of claim 1 or claim 2, the filter unit further including a first space and a second space that are separated by the removable filter, the first space is on a first side of a wall of the removable filter and the second space is on a second side of the wall of the removable filter;
the housing having at least two openings for fluid to enter and exit the filter unit, the at least two openings including at least one opening that directs fluid to enter the first space outside of the removable filter and the at least two openings including at least another opening via which fluid in the second space leaves the filter unit.

4. The filter system of any of claims 1-3, further comprising:
a filter cap that is attached to one end of the removable filter, the filter cap including a through channel that has a first end and a second end, the first end of the through channel being inserted in the first opening of the housing, the second end of the through channel being connected to an opening in the filter unit.

5. The filter system of claim 4, wherein the one or more embossments extend from the first end of the through channel of the filter cap.

6. The filter system of claim 4 or claim 5, the filter cap further comprising:
one or more shoulders that fit into one or more grooves inside the housing for securing the filter cap in the housing.

7. The filter system of any of claims 1-6, the removable cap further comprising:
a plurality of tabs extending from a peripheral of the removable cap for providing grip.

8. The filter system of any of claims 1-7, the removable cap further including screw threads that mate with screw threads at the second opening of the housing for connecting the removable cap to the housing.

9. The filter system of any of claims 1-8 the first opening of the housing further including tabs that mate with tabs on the manifold for connecting the housing to the manifold.

10. The filter system of any of claims 1-9, wherein
the manifold includes at least one inlet channel for directing fluid into the filter unit and one outlet channel for directing fluid out of the filter unit, and the valve is mechanically biased to block the inlet channel of the manifold.

11. The filter system of claim 10, the manifold further comprising:
a surface facing the surface in the first opening of the housing, the surface including a bore that is connected to the inlet channel of the manifold, the valve protruding through the bore and being biased to blocking the bore;
an outlet conduit extending from the surface of the manifold, the outlet conduit including a channel that opens at both ends, the channel being connected to the outlet channel of the manifold;
wherein the surface of the manifold does not directly contact the surface in the first opening of the housing, wherein the outlet conduit is inserted into an opening surrounded by the surface in the first opening of the housing.

12. The filter system of claim 11, further comprising:
one or more o-rings for sealing the outlet conduit in the opening surrounded by the surface in the first opening of the housing.

13. The filter system of claim 11 or claim 12, wherein the valve is spring biased.

14. A method of using a filter system, the method comprising:
detaching a filter unit of the filter system from a manifold, the filter unit including at least
a housing that has a first end and a second end, the housing including a first opening on the first end and a second opening on the second end, the first opening and the second opening being different from each other, the first opening including at least a fastener for detachably engaging the housing with the manifold that includes a valve, the second opening being closed by a removable cap;
a removable filter for filtering fluid, the removable filter being enclosed in the filter unit; and
the removable cap that includes at least a fastener for attaching the removable cap to the second opening of the housing, wherein one or more embossments are located in the first opening for controlling opening and closing of the valve, wherein the removable cap is detachable from the second opening of the housing for replacing the removable filter in the filter unit;
detaching the removable cap from the second opening of the housing;
removing the filter from the housing and inserting a new filter into the housing;
attaching the removable cap to the second opening to seal the second opening of the housing; and
attaching the filter unit to the manifold.

15. A method of assembling a filter unit of a filter system, comprising:
forming a housing of the filter unit that has a first end and a second end, the housing including a first opening on the first end and a second opening on the second end, the first opening and the second opening facing away from each other, the first opening including at least a fastener for detachably engaging the housing with a manifold that includes a valve, the housing including one or more embossments located in the first opening for controlling opening and closing of the valve;
installing a filter through the second opening in the housing; and
connecting a removable cap to the second opening of the housing and sealing the second opening;
wherein the removable cap is detachable from the second opening of the housing for replacing the filter in the filter unit.
